# EUROPÄISCHE PATENTANMELDUNG

(11) **EP 4 560 088 A2**
(43) Veröffentlichungstag der Anmeldung: **28.05.2025**
(21) Anmeldenummer: 24223044.9
(22) Anmeldetag: 13.04.2023
(51) Int. Cl.: E04D 3/35

(54) **BAHNFÖRMIGES PRODUKT SOWIE HERSTELLUNG EINES SOLCHEN**

(30) Priorität: 14.04.2022 DE 102022109256
(62) Teilanmeldung aus: 23720253.6
(71) Anmelder: BMI Group Holdings UK Limited, Reading, Berkshire RG1 1LX (GB)
(72) Erfinder: WAGNER, Udo, 69493 Hirschberg (DE); GLÜCK, Johannes, 97762 Hammelburg (DE); KAISSLING, Gernot, 68549 Ilvesheim (DE)
(74) Vertreter: Stoffregen, Hans-Herbert

(57) **Zusammenfassung**

Die Erfindung bezieht sich auf ein ein- oder mehrschichtiges bahnförmiges Produkt, insbesondere Abdeckbahn für einen Bauwerksbereich, wie Dach, Keller, Becken, bestehend aus oder enthaltend eine Deckbahn mit zumindest einem ersten Füllstoff, der aus zerkleinerten heterogenen Abfallstoffen aus Haushalt und/oder Industrie besteht oder diese enthält.

## Beschreibung

Die Erfindung bezieht sich auf ein ein- oder mehrschichtiges bahnförmiges Produkt, insbesondere Abdeckbahn für einen Bauwerksbereich, wie Dach, Keller, Becken, bestehend aus oder enthaltend ein Polymer und/oder Kunststoff enthaltende Deckbahn mit zumindest einem ersten Füllstoff.

Auch nimmt die Erfindung Bezug auf ein Verfahren zur Herstellung eines bahnförmigen Produkts, insbesondere Abdeckbahn für einen Bauwerksbereich, wie Dach, Keller, Becken, bestehend aus oder enthaltend ein Polymer und/oder Kunststoff enthaltende Deckbahn mit zumindest einem ersten Füllstoff.

Anwendungsfelder für die genannten Abdeckbahn sind in den bekannten Anwendungsnormen DIN 18531, DIN 18532, DIN 18533, DIN 18534 und DIN 18535 genannt.

Ein bahnförmiges Produkt in Form eines Abdeckschichtsystems ist z.B. der EP 3 744 519 A1 zu entnehmen. Das Abdeckschichtsystem umfasst eine ein- oder mehrschichtige Deckbahn, eine mit dieser verbundene Vliesschicht sowie eine diese abdeckende bituminöse Klebstoffschicht. Die Deckschicht beinhaltet Polyvinylchlorid als Kunststoff, einen Weichmacher, bei dem es sich um einen polymeren Weichmacher oder um einen monomeren Weichmacher oder einer Mischung dieser handeln kann, sowie Farbpigmente, UV-Stabilisatoren, Fungiziden, Thermostabilisatoren und andere Additive sowie Füllstoffe, die Kreide und/oder Talkum sind.

Ganz allgemein werden Füllstoffe eingesetzt um den Anteil der Matrix im fertigen Produkt zu verringern und damit Kosten zu sparen

Ein bahnförmiges Produkt in Form einer Dichtungsbahn wird in der WO 2018/210667 A1 beschrieben, deren von einer Kombinationsträgereinlage begrenzte Deckschicht einen Grundpolymer mit einem Anteil von 45 Gew.-% - 57 Gew.-% PVC, niedermolekularen Weichmacher mit 25 Gew.-% bis 45 Gew.-% sowie Prozesshilfen wie Antioxidationen, UV-Stabilisatoren, Farbpigmente, Titandioxid, Flammschutzadditive sowie einen Füllstoff enthält, dessen Anteil bis zu 20 Gew.-% beträgt. Als Füllstoff wird Kreide und/oder Talkum eingesetzt.

Entsprechende bahnartige Produkte, die zur Herstellung z.B. von Dachbahnen verwendet werden, unterliegen immer mehr Auflagen für ein nachhaltiges Wirtschaften. Bei der Herstellung neuer Produkte wird daher Wert auf einen schonenden Umgang mit Ressourcen und einer Reduzierung des CO₂-Ausstosses gelegt. Um diese Forderungen zu erfüllen, ist es bekannt, Rohstoffe aus Altprodukten zu recyceln, um den Einsatz neuer Rohstoffe zu reduzieren.

Im Flachdachbereich ist es daher bereits üblich, die auf dem Dach verlegten Abdichtungsbahnen aus Bitumen oder Kunststoff bei einer Sanierung zu entfernen und dem Werkstoffrecycling zuzuführen. Auf diese Weise können Bitumen und Kunststoffe wieder in der Produktion neuer Dachbahnen verwendet werden. Berücksichtigt man jedoch, dass bis zur Sanierung eines Flachdachs in der Regel mehr als 50 Jahre vergehen, sind der Verwendung recycelten Materials Grenzen gesetzt, zudem es bei der Sanierung üblich ist, alte Dachbahnen auf der Dachunterkonstruktion zu belassen und mit einer neuen Lage Dachbahnen abzudecken. Somit steht aufgrund der langen Verweildauer der Dachbahnen nur eine sehr eingeschränkte Menge von Dachbahnen für den Recyclingprozess zur Verfügung. Auch ist es nachteilig, dass sich in alten Produkten Stoffe befinden, die nach heutiger Rechtslage nicht mehr verwendet werden dürfen.

Eine aus mit Bitumen verbundenen Reststoffpartikeln bestehende Deckbahn, die für Straßenbau- und Industrieböden bestimmt ist, ist der DE 44 26 752 A1 zu entnehmen.

Nach der DE 32 43 361 A1 wird getrockneter Klärschlamm zur Herstellung von Folien benutzt, um Dämpfungseigenschaften zu erzielen.

Gegenstand der DE 24 34 487 A1 ist ein Verfahren zur Herstellung von Vergußauftragsmassen, Folien oder rollbaren Materialienbahnen, bei denen kompostierter Müll als Füllstoff Verwendung findet.

Ein Verbundwerkstoff ist aus der US 4,013,616 A bekannt. Dabei wird pyrolysierter kommunaler Müll als Füllstoff verwendet.

Ein Fußbodenbelag mit einer aus recycliertem Material bestehenden Trägerschicht ist aus der DE 699 03 764 T2 bekannt.

Aufgabe der vorliegenden Erfindung ist es, bahnförmige Produkte, insbesondere Deckbahnen für einen Bauwerksbereich, wie Dach, Keller, Becken, derart weiterzubilden, dass eine Einsparung neuen Rohstoffs erreicht wird, ohne Nachteile insbesondere in Bezug auf die physikalischen Eigenschaften im Vergleich zu herkömmlich hergestellten Produkten in Kauf nehmen zu müssen.

Zur Lösung der Aufgabe sieht die Erfindung u.a. vor, dass das bahnförmige Produkt als den ersten Füllstoff zerkleinerte heterogene Abfallstoffe aus Haushalt und/oder Industrie enthält oder der erste Füllstoff aus diesen besteht, dass der erste Füllstoff vorzugsweise eine Dichte ρ mit 1,0 g/cm³ ≤ ρ ≤ 1,6 g/cm³ aufweist, und dass das bahnförmige Produkt einen zweiten Füllstoff in Form eines anorganischen oder mineralischen Füllstoffs oder Ruß enthält.

Auch zeichnet sich die Erfindung dadurch aus, dass die Deckbahn bzw. Schicht eine Polymermatrix oder eine Bitumenmatrix enthält.

Auch zeichnet sich die Erfindung dadurch aus, dass der zweite Füllstoff Kreide und/oder Kaolin und/oder Talkum und/oder Ruß enthält, und/oder dass der Gehalt des ersten Füllstoffs zu dem zweiten Füllstoff zwischen 1:1 und 4:1 liegt, wobei vorzugsweise der Anteil in Gew.-% des ersten Füllstoffs in der Deckbahn zwischen 0,1 und 10, insbesondere zwischen 3 und 5, liegt, und/oder dass der erste Füllstoff aus unsortiertem Abfall besteht oder diesen enthält, oder dass die heterogenen Abfallstoffe vorsortierte Abfallstoffe sind, wobei vorzugsweise die vorsortierten Abfallstoffe derart vorsortiert sind, dass asbesthaltige Baustoffe, teer- und bitumenhaltige Baustoffe, kontaminierter Erdaushub aussortiert sind.

Auch zeichnet sich die Erfindung dadurch aus, dass der erste Füllstoff zumindest ein Material aus der Gruppe nativ-organische Abfälle, trockene Werkstoffe, Restabfall, Feinmüll eine Korngröße von vorzugsweise ≤ 10 mm enthält, oder zumindest ein Material oder mehrere Materialien aus der Gruppe Nahrungs- und Küchenabfall, Windeln, Kunststoff enthält, und/oder dass der erste Füllstoff enthält nachwachsende Rohstoffe, wie biologische Fasern, vorzugsweise von Bananen, Holzfasern, Kieselsäure und ggf. metallische Partikel, wie Aluminiumfolienabschnitte.

Auch zeichnet sich die Erfindung dadurch aus, dass der Abfallstoff Fasern einer Länge enthält, die im Bereich der Kurzfasern ≤ 1 mm liegt, insbesondere mehr als 90 % der Fasern eine entsprechende Länge aufweisen.

Auch zeichnet sich die Erfindung dadurch aus, dass das bahnförmige Produkt aus mehreren Schichten besteht, dass die den ersten Füllstoff enthaltende Schicht von zumindest einer Schicht abgedeckt ist, insbesondere von zwei Schichten abgedeckt und von diesen eingekapselt ist.

Auch zeichnet sich die Erfindung dadurch aus, dass der die heterogenen Abfallstoffe enthaltende oder aus diesen bestehende erste Füllstoff in Abdeckschichten im Bauwerksbereich vorhandenen Füllstoff insbesondere in Form von Kreide und/oder Talkum und/oder Kaolin und/oder Ruß zumindest teilweise ersetzt, und/oder dass die heterogene Abfallstoffe mehrere Materialien aus der Gruppe Bioabfall, Hygieneprodukt, Kunststoff, Feinmüll, Altpapier, Altglas, Verbundmaterial, Steine, Sand, Textilien, Metall enthalten oder aus diesen bestehen, und/oder dass die heterogenen Abfallsstoffe als Kunststoff zumindest ein Material aus der Gruppe der Thermoplasten bzw. Thermoplastischen Kunststoffe wie synthetisches Polyolefin, wie Polyethylen Hart-Polyethylen (HDPE), Weich-Polyethylen (LDPE), lineares Polyethylen niedriger Dichte (LLPE), Polypropylen (PP), Polystyrol (PS), wie hochschlagfestes Polystyrol (HIPS), Polyvinylchlorid (PVC), Hart-PVC, Weich-PVC, Polyurethan (PU), Polyamid (PA), Ethylen-Vinylalkohol-Copolymere (EVOH), Acrylnitril-Butadien-Styrol (ABS) enthält.

Auch zeichnet sich die Erfindung dadurch aus, dass die vorsortierten Abfallstoffe derart vorsortiert sind, dass die Abfallstoffe der REACH-Verordnung der Europäischen Union entsprechen.

Auch zeichnet sich die Erfindung dadurch aus, dass das Produktmaterial unter Ausnahme des ersten Füllstoffs enthält zumindest ein Material aus der Gruppe PVC (Polyvinylchlorid), TPE (Thermoplastisches Elastomer), TPO (Thermoplastischer Elastomer auf Olefinbasis) oder FPO (Flexibles Polyolefin), TPV (Thermoplastisches Vulkanisat), EPDM (Ethylen-Propylen-Dien-Kautschuk), EVA (Ethylenvinylacetat), Fluorpolymere oder Werkstoffe wie angegeben in DIN SPEC 20000 201:2015 08.

Auch zeichnet sich die Erfindung dadurch aus, dass das Produktmaterial, aus dem die Deckschicht oder eine Schicht dieser besteht, in Gew.-% zumindest enthält bei PVC-P als Polymermatrix: PVC ≥ 40, Weichmacher ≤ 40, weitere Materialien ≤ 20 enthaltend den ersten Füllstoff, wobei vorzugsweise der Weichmacher ein monomerer Weichmacher, ein biobasierter Weichmacher, ein linearer Weichmacher, ein polymerer Weichmacher oder eine Kombination dieser ist, oder TPE als Polymermatrix: TPE ≥ 50, weitere Materialien ≤ 50 enthaltend den ersten Füllstoff oder ECB als Polymermatrix: Butylacrylat-Copolymer ≥ 25, Bitumen ≥ 25, weitere Materialien ≤ 30 enthaltend den ersten Füllstoff oder EVA (oder EVAC) als Polymermatrix: Ethylen-Vinylacetat (EVA) ≥ 25, Polyvinylchlorid (PVC) ≤ 50, weitere Materialien ≤ 30 enthaltend den ersten Füllstoff oder FPO als Polymermatrix: Flexibles Polyolefin (FPO) ≥ 30, weitere Materialien ≤ 70 enthaltend den ersten Füllstoff oder PIB als Polymermatrix: Hochmolekulares Polyisobutylen (PIB) ≥ 30, weitere Materialien ≤ 80 enthaltend den ersten Füllstoff oder PDM als Polymermatrix: EPDM-Elastomer ≥ 30, weitere Materialien ≤ 75 enthaltend den ersten Füllstoff.

Zur Lösung der Aufgabe wird in Bezug auf das bahnförmige Produkt selbst im Wesentlichen vorgeschlagen, dass der erste Füllstoff aus zerkleinerten heterogenen Abfallstoffen aus Haushalt und/oder Industrie besteht oder enthält.

Dabei sollten die Abfallstoffe zumindest nachwachsende Rohstoffe, bzw. Teile dieser und/oder Mineralien bzw. aus Materialien bestehende oder enthaltende Produkte, wie Gestein, Mineralien oder Salze, enthalten oder aus diesen bestehen.

Erfindungsgemäß wird zur nachhaltigen Herstellung von bahnförmigen Produkten der mengenmäßig dem Grunde nach unbeschränkt zur Verfügung gestellte Abfall eingesetzt, der insbesondere im Haushalt aber auch in der Industrie anfällt, sofern es sich nicht um Sondermüll handelt.

Der erste Füllstoff kann das Polymer der Matrix der Deckbahn ersetzen.

Es wird zum Beispiel bei einer eine Polymermatrix enthaltenden Deckbahn der ansonsten vorhandene Füllstoff aus anorganischem oder mineralischem Material, wie insbesondere Kreide und/oder Talkum und/oder Kaolin, durch den erfindungsgemäßen Füllstoff ganz oder zumindest teilweise ersetzt.

Mit anderen Worten kann der erste Füllstoff ein ein Polymer ersetzender Füllstoff sein.

Zum Begriff Deckbahn ist anzumerken, dass diese ein- oder mehrschichtig ausgebildet sein kann. Bei einer mehrschichtigen Deckbahn enthält zumindest eine Schicht den erfindungsgemäßen ersten Füllstoff.

Beispiele für Abfall von Privathaushalten (Hausmüll) sind:
Restmüll, Bioabfall, wie Nahrungs- und Küchenabfälle, Altglas, Altpapier, Verpackungen (Grüner Punkt), Elektronikschrott, Sondermüll, Sperrmüll, Metall-Sperrmüll, Gartenabfall wie Grünschnitt, Wurzelwerk, Stämme und Stubben, Textilien (Altkleidersammlung), Schadstoffe aus Haushalten.

Weitere Abfallarten, die zumeist in Abfallcontainern entsorgt werden müssen, sind:
Bau- und Abbruchabfälle, Bauschutt, Baumischabfälle, Betonbruch, Estrich, Gips, Rigips, Gasbeton, Steine, Gartenabfälle und Grünschnitt, Wurzelwerk, Stämme und Stubben, Erdaushub (Boden und Steine), Holz, unbehandelt und behandelt, schadstoffbelastete Abfälle wie Sondermüll, asbesthaltige Baustoffe, teer- und bitumenhaltige Dachpappe, kontaminierter Erdaushub.

Unter Abfall sind dem Grunde nach von Menschen genutzte Materialien und Substanzen zu verstehen, die keinen unmittelbaren Verwendungszweck mehr erfüllen. Zu den Abfallstoffen gehören Biomüll, Altpapier, Leichtverpackungen, Altglas, Hygieneprodukte, Kunststoffe aber auch Inertmaterial wie Stein und Sand und Alttextilien.

Auf rechtlicher Seite wird in Deutschland Abfall unter der Handhabung des Kreislaufwirtschaftsgesetz, welches am 1. Juni 2012 in Kraft getreten ist - Gesetz zur Förderung der Kreislaufwirtschaft und Sicherung der umweltverträglichen Bewirtschaftung von Abfällen (Kreislaufwirtschaftsgesetz, KrWG) - in § 6 als fünfstufige Abfallhierarchie gestaffelt:
Vermeidung, Vorbereitung zur Wiederverwendung, Recycling, sonstige Verwertung, insbesondere energetische Verwertung und Verfüllung, Beseitigung.

Ausgehend von diesem Grundsatz ist die Maßnahme zur Abfallbewirtschaftung auszuwählen, die den Schutz von Mensch und Umwelt am besten gewährleistet. Zu berücksichtigen sind dabei technische, wirtschaftliche und soziale Gesichtspunkte. Konkretisiert wird die Abfallhierarchie durch die Grundpflichten in §§ 7,8. Bezüglich der neu aufgenommenen Verwertungsoptionen (Vorbereitung zur Wiederverwendung - Recycling - sonstige Verwertung) sieht § 8 Abs. 2 vor, dass der Vorrang oder Gleichrang einer Verwertungsmaßnahme und Anforderungen an die Hochwertigkeit der Verwertung für bestimmte Abfallarten durch Rechtsverordnung festgelegt werden. Die sogenannte Heizwertklausel in Absatz 3 a.F. wurde mit dem Gesetz zur Änderung des Kreislaufwirtschaftsgesetzes vom 27. März 2017 aufgehoben. Als Folge der Aufhebung gilt der grundsätzliche Vorrang der stofflichen Verwertung (Recycling) vor der energetischen Verwertung unabhängig vom Heizwert der Abfälle nach § 6 Abs.1. Weiterhin formuliert § 9 Abs. 2 - bis auf wenige Ausnahmen - ein Vermischungsverbot für gefährliche Abfälle.

Die Erfindung sieht vor, den Abfall als ersten Füllstoff einzusetzen, wobei für diesen hierdurch eine höherwertigere Verwertung erfolgt; so wird Abfall recycelt, anstatt diesen der thermischen Verwertung zuzuführen oder als Verfüllung zu verwenden. Aufgrund der erfindungsgemäßen Verwertung von Abfall werden auch die Energie- als auch Schadstoffausstöße oder auch Lagerkapazitäten, beispielsweise auf Deponien, deutlich verringert.

Daher ist insbesondere vorgesehen, dass der aus dem Abfallstoff bestehende oder enthaltende erste Füllstoff zumindest ein Material oder mehrere Materialien aus der Gruppe Bioabfall, wie Nahrungs- und Küchenabfall, Hygieneprodukte, wie Windeln, sowie Kunststoff enthält.

Schadstoffhaltige Abfälle, Bau- und Abbruchabfälle, sind für die erfindungsgemäße Verwendung nicht vorgesehen.

Hausmüll wurde in Deutschland beispielhaft in einem veröffentlichten Abschlussbericht des Bundesamtes "Vergleichende Analyse des Siedlungsrestabfällen aus repräsentativen Regionen in Deutschland zur Bestimmung des Anteils an Problemstoffen und verwertbaren Materialien", veröffentlicht im Juni 2020. Hier wird darauf Bezug genommen, dass es im Wesentlichen fünf verschiedene Hauptstoffgruppen gibt, die hier entsprechend anzutreffen sind:
- 39,3 Gew. % Nativ-organische Abfälle
- 27,6 Gew. % Trockene Werkstoffe
- 26,3 Gew. % Restabfall
- 6,3 Gew. % Feinmüll (0-10 mm Kerngröße)
- 0,5 Gew. % Problem- und Schadstoffe

Die Nativ-organischen Abfälle sind vor allem als Küchen- und Nahrungsabfälle, Gartenabfälle, sonstige organische Abfälle sowie gefüllte oder teilentleerte Lebensmittelverpackungen zusammengefasst.

Trockene Wertstoffe sind vor allem als Altpapier, Altglas, Kunststoffen, Alttextilien sowie Holz/Kork sind darin auch Verbunde und Elektroaltgeräte zusammengefasst.

Der in nahezu allen Kommunen in Deutschland gemäß Trennvorgaben über den Hausmüll zu entsorgende Restabfall sind mit einem größten Anteil zu entsorgende Hygieneprodukte.

Im organisch-mineralischen Feinmüll befinden sich auch Restabfälle wie z. B. Kehricht und Asche.

Die Problem- und Schadstoffe sind auch Bestandteil aus der Gruppe Arzneimittel und Medikamente zugeordnet, die in vielen Kommunen in Deutschland gemäß Trennvorgaben für die Bürger auch über den Hausmüll entsorgt werden können.

Ebenfalls Altbatterien und Altakkumulatoren sind in dieser Hauptstoffgruppe enthalten.

Weiterhin sind deutliche Unterschiede der Müllanteile in Menge als auch der Anteile hinsichtlich der Siedlungsstruktur erkenntlich, hier gibt es Unterschiede im ländlich, ländlich dicht und städtisch besiedelten Gebieten.

Um entsprechend zerkleinerten heterogenen Abfall für ein bahnförmiges Produkt, insbesondere äußere Schicht oder Lage einer Abdeckbahn, wie Dachbahn, einsetzen zu können, sollten die Abfallstoffe bevorzugten Korngrößen von ≤ 1 mm, besonders bevorzugt von ≤ 250 µm, aufweisen.

Insbesondere enthält der als erster Füllstoff zu verwendende Abfall Fasern, die generell zwischen Naturfasern und Kunstfasern (oder auch Chemiefasern genannt) unterschieden werden. Beide Gruppen werden in Produkten des täglichen Lebens - beispielsweise in Textilprodukten wie Kleidung und Stoffen, als Verstärkungseinlagen in der Industrie, als Verstärkungseinlagen in Kunststoffprodukten, in Bauprodukten verwendet.

Zu den Naturfasern gehören:
Pflanzenfasern, ein Sammelbegriff für Fasern pflanzlicher Herkunft zu denen gehören:
Samenfaser, Baumwollfaser (CO), Kapok (KP), Akon, Pappelflaum, Bastfaser, Bambusfaser, Fasernessel, Hanffaser (HA), Sibirische Hanfnessel, Jute (JU), Urena (JR), Flachsfaser, Ramiefaser (RA), Kenaffaser (KE), Faser der Roselle (JS), Faser des Sunns (SN), Abutilon, Punga, Rizinus, Bluish Dogbane, Blattfaser, Sisal (SI), Abacä (Manilahanf) (AB), Curauä, Fibre aus Agaven, Ixtlefaser, Arenga-Faser,
Afrik oder Palmfaser, Henequen-Faser (HE), Fique (FI) Blattfaser, Phormium, Alfa (AL), Maguey, Yucca, Pita, Fruchtfaser, Kokosfaser (CC).

Als Ersatzfasern können genutzt werden z.B. Fasern aus:
Ginster, Hopfen, Rohrkolbenschilf, Weidenbast, Faser aus Spinndrüsen, Tussahseide (ST), Mugaseide, Eriseide, Anapheseide, Spinnenseide, Byssusseide, Faser aus Spinndrüsen von Seidenspinnern, Fasern aus Haarfollikeln, Wolle von Schafen (WO), Alpaka (WP), Lama (WL), Vikunja (WG), Guanako (GU), Kamelhaar (WK), Angora (WA), Kaschmir (WS), Mohair (WM), Yak (HY), Ziegenhaar (HZ), Rinderhaar (HR), Rosshaar (HS), Fasergips, Wollastonit.

### Kunst- oder Chemiefasern:

Als Chemiefasern werden alle Fasern bezeichnet, die künstlich, nach chemisch-technischen Verfahren aus natürlichen oder synthetischen Polymeren sowie aus anorganischen Stoffen überwiegend in Form von Filamenten (Monofilamente, Multifilamente) hergestellt und zu Filamentgarnen weiterverarbeitet oder zu Spinnfasern (Stapelfasern) durch Schneiden oder Reißen verarbeitet und anschließend durch Sekundärspinnverfahren zu Garnen versponnen oder z. B. durch Vliesstoff-Herstellungsverfahren direkt zu textilen Flächengebilden verarbeitet werden. Aufgrund ihrer künstlichen Herkunft werden sie nach wie vor auch als Kunstfasern bezeichnet.

Chemiefasern sind in den Normen DIN EN ISO 2076 zur Bezeichnung von Chemiefasern aus dem Jahr 2014 beschrieben. Die Gattungsnamen werden üblicherweise zusammen mit dem Wort "Faser" gebraucht, so z. B. die Gattungsnamen Viskose als Viskosefaser und Glas als Glasfaser.

Fasern aus natürlichen Polymeren, Fasern aus regenerierter Cellulose, Viskose (CV), Modal (CMD), Lyocell (CLY), Cupro (CUP), Fasern aus Celluloseestern, Acetat (CA), Triacetat (CTA), Proteinfasern, regenerierte Proteinfasern (PR), modifizierte Sojabohnen-Proteinfasern (MSP), Zein, Faser aus Mais-Eiweiß, Caseinfasern (auch Kaseinfasern), künstliche Spinnenfasern, Polylactid (PLA), Alginat (ALG), Chitin (CHT), Elastodien (ED), biobasierte Polyamide (PA 4.10 / PA 6.10 / PA 10.10 / PA 10.12 / PA 11), Fasern aus synthetischen Polymeren, Polyester (PES), Polyamid (PA) (USA Nylon), Polyimid (PI), Polyamidimid (PAI), Aramid (AR), Polyacryl (PAN), Modacryl (MAC), Polytetrafluorethylen (PTFE), Polyethylen (PE), Polypropylen (PP), Polychlorid (CLF), Elastan (EL), Polybenzoxazol (PBO), Polybenzimidazol (PBI), Polyharnstoff, Melamin (MEL), Polyphenylensulfid (PPS), Trivynil, Elastolefin (EOL), Elastomultiester (ELE), Polyvinylalkohol (PVA oder PVAL), Vinylal (PVAL), Polycarbonat (PC), Polystyrol (PST, PS), Fasern aus anorganischen Stoffen, Keramikfasern, Quarzfaser, Kieselsäurefasern, Glasfaser (GF), Basaltfaser, Kohlenstofffaser (CF), Borfaser, Kristallfasern, photonische Kristallfasern (Photonic-crystal fiber PCF), Schlackenfaser, Nanotubefasern, Metallfasern (MTF, ME/MET).

Die in dem ersten Füllstoff enthaltenen Fasern sollten unabhängig davon, ob es sich um Kunstfasern oder Naturfasern handelt, eine möglichst kurze Länge aufweisen.

Generell unterscheidet man technisch - vor allem bei faserverstärkten Kunststoffen - verschiedene Gruppen an Faserlängen:
- Kurzfasern L = 0,1 bis 1 mm
- Langfasern L = 1 bis 50 mm
- Endlosfasern L > 50 mm

Für die Verarbeitung als ersten Füllstoff sollten die Faserlängen im Bereich der Kurzfasern, also 0,1 bis 1,0 mm, liegen. Der aus den heterogenen Abfallstoffen hergestellte erste Füllstoff, der den in dem Stand der Technik vorhandenen Füllstoff Kreide und/oder Talkum ersetzt, sollte bevorzugterweise eine Dichte ρ mit 1,0 g/cm³ ≤ ρ ≤ 1,6 g/cm³ aufweisen.

Bevorzugterweise sollte die Zusammensetzung der Abfallstoffe derart sein, dass der Glührückstand des ersten Füllstoffs bei 750 °C beträgt 7,75 % bis 7,90 %, insbesondere 7,80% bis 7,85 %.

Bevorzugterweise enthält der erste Füllstoff nachwachsende Rohstoffe, wie biologische Fasern von Bananen, Holzfasern, Pflanzen, Kieselsäure, und metallische Partikel, wie Aluminiumfolienabschnitte.

Der erste Füllstoff kann auch Verbundwerkstoffe enthalten. Verbundwerkstoffe verstehen sich als Kombination verschiedener Materialien - bspw. Metall/Kunststoffverbunde -, Kombination verschiedener Stoffklassen - bspw. im Kunststoffbereich: Kunststoffverpackungen, welche aus mehreren Schichten bestehen, welche wiederum auf verschiedenen Kunststofftypen basieren. Aber auch Faserverbundwerkstoffe bestehend aus einer Harzmatrix und einem Verstärkungsgitter kommen in Frage. Die Verbundwerkstoffe können ggf. stofflich getrennt werden, bspw. unter Energiezuführung, wie z.B. Erhitzen.

Es ist insbesondere vorgesehen, dass der erste Füllstoff aus unsortiertem Abfall besteht oder diesen enthält. Es besteht jedoch insbesondere die Möglichkeit, dass die heterogenen Abfallstoffe vorsortierte Abfallstoffe sind.

Dabei sollten insbesondere die vorsortierten Abfallstoffe derart vorsortiert sein, dass die Abfallstoffe der REACH-Verordnung der Europäischen Union entsprechen.

Insbesondere ist auch vorgesehen, dass die vorsortierten Abfallstoffe derart vorsortiert sind, dass schadstoffbelastete Abfälle, insbesondere asbesthaltige Baustoffe, Teer- und bitumenhaltige Baustoffe, kontaminierter Erdaushub, aussortiert sind.

Insbesondere ist auch vorgesehen, dass der erste Füllstoff Abfälle enthält, die von bekannten Recyclingprozessen bei der Herstellung von bahnförmigen Materialien, wie Dachbahnen, bekannt sind. Entsprechende für das Recycling bestimmte Produktionsabfälle entstehen beispielsweise beim Randabschnitt - sogenannte Randstreifen - oder auch beim Anfahren der Produktion, d.h. anfallendes Material, bis die Maschinenparameter final der Spezifikation der herzustellenden Bahnen entsprechen und diese produziert werden können. Hierbei kann es sich um homogene als auch um heterogene Materialien handeln. Letztere sind z.B. mehrschichtige Bahnen, die Verstärkungseinlagen, z.B. aus Glas oder Polyester, enthalten. Produktionsabfälle, die als erster Füllstoff benutzt werden können, sind auch solche, wenn bei der Herstellung von Bahnen eine Umstellung erfolgen muss, beispielsweise bei Farbwechsel oder Rezepturwechsel.

Der erste eingesetzte Füllstoff bietet u.a. den Vorteil, den Anteil der Matrix eines fertigen Produkts zu verringern und damit Kosten zu sparen.

Hervorzuheben und gleichfalls eigenerfinderisch ist, dass die Deckbahn neben dem ersten Füllstoff einen zweiten Füllstoff enthalten kann, der üblicherweise bei Polymer und/oder Kunststoff aufweisenden Deckbahnen oder Schichten verwendet wird, die zur Herstellung mehrschichtiger Produkte, wie Dachbahnen oder sonstige Abdichtbahnen, zum Einsatz gelangen. Der zweite Füllstoff ist aus der Gruppe an anorganischen und/oder mineralische Füllstoffe und/oder Rußen. Hervorzuheben ist insbesondere ein Produkt aus der Gruppe Kreide, Talkum, Kaolin, Ruß.

Der Anteil des zweiten Füllstoffs in Gew.-% sollte vorzugsweise in etwa dem Anteil des ersten Füllstoffs in Gew.-% der Deckbahn sein.

In einer weiteren Ausführungsform kann der Gehalt des zweiten Füllstoffs auch deutlich unterhalb des ersten Füllstoffs liegen, wie beispielsweise Verhältnisse von erstem zu zweitem Füllstoff von 4:1, 3:1, 2:1.

Werden ein erster und ein zweiter Füllstoff benutzt, wobei aus jedem Füllstoff mit einem Trägermaterial ein Granulat hergestellt wird, die zusammen ein Hybrid-Granulat ergeben, ist insbesondere vorgesehen, dass z.B. durch eingesetzte Siebe oder Schmelzefilter die Granulatform vereinheitlicht wird, so dass Verarbeitungs- und Dosiermöglichkeiten verbessert werden. Hierdurch ist beim Extrusionsschritt, also bei der Herstellung der Deckbahn, die auch als Folie oder Schicht bezeichnet werden kann, eine bessere Homogenisierung, d.h. gleichmäßige Verteilung des Hybrid-Granulats in der Deckbahn erzielbar.

Füllstoffe werden im Allgemeinen eingesetzt um folgende Eigenschaften zu verbessern:
- die Optimierung und Erhöhung der Steifigkeit
- Verminderung der Schrumpfung und Verbesserung der Oberflächenanmutung.
- gezielte Erhöhung der thermischen oder elektrischen Leitfähigkeit
- die ökologische Nachhaltigkeit
- der Elastizitätsmodul
- die Wärmeformbeständigkeit
- die Dauergebrauchstemperatur
- die Schrumpfungsneigung wird deutlich verringert
- die Erhöhung der Härteeigenschaften.

Die technische Herausforderung besteht hierbei unter einer guten Einarbeitung und Verteilung in der Trägermaterialmatrix, der Feinheit und Verteilung der Füllstoffpartikel, eine zu hohe Dosierung zu vermeiden, da folgende Eigenschaften sonst negative beeinflusst werden können:
- eine höhere Masse
- deutliche Verschlechterung der Zugfestigkeit und Bruchdehnung.

Die Kombination des ersten Füllstoffs aus Abfallstoffen als auch des zweiten Füllstoffs, welche anorganische, mineralische Füllstoffe oder Ruße sein können, ergeben auch in der Kombination keine Verschlechterung dieser Merkmale. Durch unterschiedliche Korngrößen- und Feinheitsverteilungen des ersten und zweiten Füllstoffs werden diese sogar teilweise noch verbessert.

Hervorzuheben und eigenerfinderisch ist, dass der erste Füllstoff von Schichten des bahnförmigen Produkts abgedeckt, insbesondere von den Schichten eingekapselt ist, die keinen Anteil des ersten Füllstoffs enthalten, jedoch einen üblichen Füllstoff (zweiter Füllstoff), wie Kreide und/oder Talkum und/oder Kaolin, und/oder Ruß enthalten können.

Insbesondere durch das Einkapseln ist sichergestellt, dass der aus den zerkleinerten bzw. gemahlenen heterogenen Abfallstoffen bestehende erste Füllstoff Flüssigkeit nicht aufnehmen kann. Weiterhin werden Wechselwirkungen mit Medien oder auch direkter Kontakt mit untenliegenden Substraten vermieden.

Besonders gute Ergebnisse lassen sich dann erzielen, wenn der Anteil in Gew.-% des ersten Füllstoffs in der Deckbahn bzw. der Schicht der Deckbahn, die den ersten Füllstoff enthält, zwischen 0,1 und 10, insbesondere zwischen 3 und 5, liegt.

Bei dem bahnförmigen Produkt handelt es sich insbesondere um ein als Kunststoffprodukt zu bezeichnendes Produkt, wie Kunststoffdachbahn, wobei das Produktmaterial in Gew.-% eine Polymermatrix und zumindest nachstehende Bestandteile enthält. An erster Stelle ist das Material der Polymermatrix genannt.
- PVC-P (Bezug nach DIN SPEC 20000-201): PVC ≥ 40, Weichmacher ≤ 40, weitere Materialien ≤ 20 enthaltend den ersten Füllstoff
   oder
- TPE (Bezug nach DIN SPEC 20000-201): TPE ≥ 50, weitere Materialien ≤ 50 enthaltend den ersten Füllstoff
   oder
- ECB (Bezug nach DIN SPEC 20000-201): Buytlacrylat-Copolymer ≥ 25, Bitumen ≥ 25, weitere Materialien ≤ 30 enthaltend den ersten Füllstoff
   oder
- EVA (oder EVAC (Bezug nach DIN SPEC 20000-201)): Ethylen-Vinylacetat (EVA) ≥ 25, Polyvinylchlorid (PVC) <_ 50, weitere Materialien ≤ 30 enthaltend den ersten Füllstoff
   oder
- FPO (Bezug nach DIN SPEC 20000-201): Flexibles Polyolefin (FPO) ≥ 30, weitere Materialien ≤ 70 enthaltend den ersten Füllstoff
   oder
- PIB (Bezug nach DIN SPEC 20000-201): Hochmolekulares Polyisobutylen (PIB) > 30, weitere Materialien ≤ 80 enthaltend den ersten Füllstoff
   oder
- EPDM (Bezug nach DIN SPEC 20000-201): EPDM-Elastomer ≥ 30, weitere Materialien ≤ 75 enthaltend den ersten Füllstoff.

Als Weichmacher kommt bei PVC-P insbesondere ein monomerer Weichmacher, ein polymerer Weichmacher, ein linearer Weichmacher, ein biobasierter Weichmacher oder eine Kombination dieser in Frage.

Der erste Füllstoff sollte insbesondere zumindest ein Material aus der Gruppe der Thermoplasten bzw. thermoplastischen Kunststoffe enthalten, wie synthetisches Polyolefin, wie Polyethylen, Hart-Polyethylen (HDPE), Weich-Polyethylen (LDPE), lineares Polyethylen niedriger Dichte (LLPE), Polypropylen (PP), Polystyrol (PS), wie hochschlagfestes Polystyrol (HIPS), Polyvinylchlorid (PVC), Hart-PVC, Weich-PVC, Polyurethan (PU), Polyamid (PA), Ethylen-Vinylalkohol-Copolymere (EVOH), Acrylnitril-Butadien-Styrol (ABS) enthalten.

Handelt es sich insbesondere bei der Deckbahn um eine Kunststoffbahn mit einer Polymermatrix, so wird von der erfindungsgemäßen Lehre auch eine Deckbahn erfasst, die Bitumen enthält. Durch den ersten Füllstoff werden Polymere wie APP (Ataktisches Polypropylen) oder IPP (Isotaktisches Polypropylen) ersetzt.

Es gelangt folglich auch die erfindungsgemäße Lehre bei einer Bitumen als Matrix aufweisenden Deckbahn zum Einsatz, Polymer der Matrix durch den erfindungsgemäßen Füllstoff zu ersetzen, um insbesondere kostengünstiger eine Deckbahn herzustellen.

Die Erfindung zeichnet sich daher auch aus durch die Verwendung des erfindungsgemäßen Füllstoffs aus zerkleinerten heterogenen Abfallstoffen aus Haushalt und/oder Industrie als Ersatz von Polymer der Matrix der Deckbahn.

Insbesondere ist auch vorgesehen, dass der erste Füllstoff nicht in Pulverform, sondern in Form eines Granulats eingesetzt wird.

Ein Verfahren zur Herstellung eines bahnförmigen Produkts, insbesondere Abdeckbahn für einen Bauwerksbereich, wie Dach, Keller, Becken, bestehend aus oder enthaltend eine Deckbahn mit zumindest einem ersten Füllstoff, insbesondere mit einigen oder mehreren zuvor erläuterten Merkmalen, umfasst zumindest die Verfahrensschritte
a) Mischen von zumindest heterogenen Abfallstoffen aus Haushalt und/oder Industrie,
b) vorzugsweise Erhitzen und Trocknen der Mischung,
c) Herstellen eines Granulats zur Bildung eines ersten Materials,
d) ggf. Mahlen des Granulats des ersten Materials,
e) ggf. Sieben des ersten Materials
f) Mischen des ersten Materials mit einem mehrere Substanzen aufweisenden zweiten Material, die zusammen das Produktmaterial bilden, und
g) Extrudieren des Produktmaterials, um anschließend insbesondere durch Kalandrieren das bahnförmige Produkt oder eine Schicht von diesem zur Verfügung zu stellen.

Durch die Verfahrensschritte a) bis f) bzw. a), b), c) und f) wird ein Dry-Blend hergestellt.

Die Verfahrensschritte d) und e) können auch vor dem Verfahrensschritt c) zusätzlich eingesetzt werden. Hierdurch wird eine noch kompaktere Form des Granulats bzw. eine noch bessere Größenverteilung der enthaltenen Partikel des erstellten Granulats erreicht.

Die Verfahrensschritte d) und e) können auch vor dem Verfahrensschritt c) anstatt danach eingesetzt werden, hierdurch wird eine noch kompaktere Form des Granulats bzw. eine noch bessere Größenverteilung der enthaltenen Partikel des erstellten Granulats erreicht.

Insbesondere schlägt die Erfindung ein Verfahren zur Herstellung eines bahnförmigen Produkts, insbesondere Abdeckbahn für einen Bauwerksbereich, wie Dach, Keller, Becken, bestehend aus oder enthaltend eine ein Polymer und/oder Kunststoff enthaltende Deckbahn mit zumindest einem ersten Füllstoff vor, insbesondere mit einigen oder mehreren zuvor erläuterten Merkmalen, umfassend, zumindest die Verfahrensschritte
A) Mischen von zumindest heterogenen Abfallstoffen aus Haushalt und/oder Industrie,
B) vorzugsweise Erhitzen und Trocknen der Mischung,
C) Herstellen eines Granulats zur Bildung eines ersten Materials,
D) ggf. Mahlen des Granulats des ersten Materials,
E) ggf. Sieben des ersten Materials
F) Mischen des ersten Materials mit einem mit der Polymermatrix kompatiblen Trägermaterial, insbesondere Kunststoff, und Granulieren, insbesondere Extrudieren oder Compoundieren und anschließendes Granulieren zur Herstellung eines Masterbatch-Granulats,
G) Mischen des Masterbatch-Granulats mit einem mehrere Substanzen enthaltenden dritten Material, die zusammen das Produktmaterial bilden, und
H) Extrudieren des Produktmaterials, um anschließend insbesondere durch Kalandrieren das bahnförmige Produkt oder eine Schicht von diesem zur Verfügung zu stellen.

Das unter c) bzw. C) genannte Herstellen eines Granulats und das ggf. erfolgende Mahlen und Sieben führt dazu, dass der Abfall in einer gut dosierbaren Variante vorliegt, um diesen Rezepturvorgaben entsprechend in ein Material einzuarbeiten.

Insbesondere ist vorgesehen, dass vor dem Verfahrensschritt f) bzw. G) ein Hybrid-Granulat hergestellt wird, das den ersten Füllstoff sowie den zweiten Füllstoff enthält.

Nach dem Verfahrensschritt F) wird das Masterbatch-Granulat mit einem den zweiten Füllstoff enthaltenden Granulat gemischt, das als Trägermaterial aus einem gleichfalls mit der Polymermatrix kompatiblen Material besteht. Das so hergestellte Granulat ist als Hybrid-Granulat zu bezeichnen, das gemäß dem Verfahrensschritt G) sodann mit einem mehrere Substanzen enthaltenden dritten Material, die zusammen das Produktmaterial bilden, gemischt wird.

Entsprechend wird vor dem Mischen des ersten Materials nach dem Verfahrensschritt f) das erste Material mit einem Granulat gemischt, das aus dem zweiten Füllstoff besteht oder dieses enthält. Dieses so hergestellte Hybridmaterial wird sodann mit dem mehrere Substanzen aufweisenden zweiten Material gemischt, die zusammen das Produktmaterial bilden.

Das im Verfahren genannte Mahlen des Granulats kann auf gängigen Mahlanlagen durchgeführt werden, wie bspw. Planeten-Kugelmühlen, welche sich hervorragend eignen für die Feinstzerkleinerung von harten, mittelharten, weichen, spröden, zähen und feuchten Materialien. Das Mahlgut wird vorwiegend durch hochenergetischen Schlag von Mahlkugeln in rotierenden Mahlbechern zerkleinert. Weiterhin können auch Schneidmühlen mit Messersystem oder Feinmühlen mit Prallscheibensystem genutzt werden.

Das im Verfahren genannt Sieben bzw. Siebverfahren kann auf gängigen Siebanlagen, wie Taumelsiebe, Rüttelsiebe, Rundsiebe, Ultraschallsiebe und/oder Mühle mit einem Plansichter und/oder Kombinationen der einzelnen Verfahren ausgeführt werden. Das Sieben erzielt den Vorteil, dass zu große Partikel aus dem heterogenen ausgesiebt und nicht im Produktionsfluss weiter transportiert werden.

Für das Extrudieren zeigt es sich vorteilhaft einen Schmelzefilter zu benutzen, um zu große Partikel aus dem Füllstoff bzw. dem Material herauszufiltern. In einer beispielhaften Folienextrusion wird zur Formgebung bzw. zur Bildung einer Schicht bzw. Folie bzw. Dachbahn eine Breitschlitzdüse genutzt. Über den eingestellten Düsenspalt können die Schichtdicken der einzelnen Schichten, Bahnen oder Folien eingestellt werden. Befinden sich nun zu große Partikel in der Poylmerschmelze in der Düse für den eingestellten Walzenspalt, so könnte dies zu unerwünschten Effekten in der Schicht, Folie oder Dachbahn wie z.B. ungleichmäßige Dickenverteilung, ersichtliche Mängel wie Einfallstellen, verbrannte Punkte/Stippen, führen.

Weiterhin zeigt sich eine gute Einarbeitung des erfindungsgemäßen Füllstoffs über einen Verfahrensschritt der Granulierung eines Masterbatches (Schritt F)). Ein etwaiges Masterbatch wird hierbei aus einem Basismaterial, hauptsächlich einem Thermoplasten, hergestellt, welches mit dem eigentlichen Material des später einzumischenden Granulates verträglich und homogenisierbar ist. Beispielsweise wird für eine PVC-P-Bahn als Polymermatrix- oder Trägermaterial des Masterbatches PVC oder EVA oder für eine bei TPE oder FPO-Bahn als Polymermatrix (Trägermaterial) PE oder PP Typen gewählt.

Aufgrund der heterogenen Struktur des erfindungsgemäßen Füllstoffs sind Füllgrade des Masterbatches von bis zu 30 Gew. % zu erzielen, bevorzugt bis 20 Gew. %, besonders bevorzugt bis 15 Gew. %.

Es besteht die Möglichkeit, dass nach Herstellung des Produktmaterials dieses extrudiert wird, um eine erste Schicht zu bilden, wobei die erste Schicht unterseitig von einer zweiten Schicht und oberseitig von einer dritten Schicht bedeckt und gegebenenfalls von der zweiten und dritten Schicht vollständig eingekapselt wird.

Dabei kann die erste Schicht mit der zweiten und dritten Schicht z.B. durch Koextrusion im Kalanderverfahren oder im Streichverfahren verbunden werden.

Insbesondere ist vorgesehen, dass die heterogenen Abfallstoffe bzw. das aus diesem hergestellte Granulat derart gemahlen wird, dass die Korngröße der gemahlenen Abfallstoffe von ≤ 1 mm, besonders bevorzugt von ≤ 250 µm, erreicht wird.

Bevorzugterweise wird das erste Material bei einer Temperatur T₁ mit T₁ < 80 °C gemahlen. Zur Verbesserung tragen auch gekühlte Systeme bei, bspw. Auf Temperaturen bei Raumtemperatur oder unter 60 °C.

Das Mischen des ersten Materials mit dem zweiten Material bzw. des Masterbatch-Granulats mit dem dritten Material erfolgt insbesondere in einem Extruder, wobei eine Temperatur T₂ mit 160 °C ≤ T₂ ≤ 200 °C, bevorzugt zwischen 175 °C und 195 °C während des Prozesses als bevorzugt anzugeben ist.

Im Falle von PVC-P kann der erfindungsgemäße erste Füllstoff auch während einer Dry-Blend-Herstellung zugegeben werden. Dabei gibt es die Möglichkeit, entweder das hergestellte Abfallgranulat oder die gemahlene und gesiebte Abfallmischung dem Dry-Blend-Verfahren zuzugeben. Hierbei ist die Zugabe nach der Weichmacherzugabe d.h. ab Temperaturen von > 80 °C empfehlenswert, um eine Wanderung des Weichmachers in den ersten Füllstoff zu unterbinden. Weiterhin sind Einschränkungen nicht gegeben und die Mischung sollte bis Temperaturen von 110 °C ≤ T ≤ 130 °C durchgeführt werden, um einen homogenen, nicht gelierten Dry-Blend zu erhalten.

Bei der Zugabe des ersten Füllstoffs kann eine vorherige Trocknung bei Temperaturen zwischen 40 °C bis 80 °C, vorzugsweise 50 °C bis 70 °C, einen Vorteil hinsichtlich der Verarbeitbarkeit bzw. Compoundieren bzw. Extrudieren der Deckbahn ermöglichen. Der erste Füllstoff kann so etwaige Feuchtigkeitsrückstände aufnehmen, welche beispielsweise während des Transportes auftreten können. Eine Unterbindung der Wasseraufnahme des ersten Füllstoffs ist nur mit großer Sicherheit gegeben, sofern wasserdampfundurchlässige Schichten, wie Beispielsweise Alu-Folien - hier mindestens einer Schichtdicke von 8 µm - benutzt werden.

Erfindungsgemäß ist vorgesehen, den ersten Füllstoff erst dann der Mischung aus Kunststoff und Weichmacher und ggf. weiterer Rezepturbestandteile hinzuzugeben, wenn der Weichmacher von dem Kunststoff vollständig aufgenommen worden ist (Trockenpunkt).

Das Extrudieren bzw. Kalandrieren sollte bei einer Temperatur T₃ mit 160 °C ≤ T₃ ≤ 200 °C, bevorzugt zwischen 175 °C und 195 °C, erfolgen.

Des Weiteren sollte die erhitzte Mischung aus den heterogenen Abfallstoffen vor der Herstellung des Granulats verdichtet werden.

Entsprechende Verfahrensschritte gelangen auch dann zur Anwendung, wenn neben dem ersten Füllstoff zusätzlich der zweite Füllstoff verwendet wird.

Erfindungsgemäß ist vorgesehen, dass der zur Herstellung von bahnförmigen Produkten üblicherweise benutzte Füllstoff, der insbesondere Kreide und/oder Talkum ist, durch heterogene Abfallstoffe ersetzt wird, die aus Müll, sei es Hausmüll, sei es Industriemüll, sei es eine Kombination dieser, stammt. Dabei handelt es sich bei dem bahnförmigen Produkt insbesondere um die Abdeck- oder Deckbahn eines Abdecksystems, das im Bauwerksbereich eingesetzt wird, wobei bevorzugterweise Dachbahnen zu nennen sind.

Eine entsprechende Deck- bzw. Abdeckbahn kann entsprechend dem Stand der Technik, wie dieser z.B. der EP 3 744 519 A1 oder der WO 2018/021667 A1 zu entnehmen ist, auf deren Offenbarung ausdrücklich Bezug genommen wird, auf einer Verstärkungsschicht, wie eine aus Glasvlies und/oder eine Glasverstärkung bestehende Kombinationsträgereinlage oder eine Vliesschicht aufgebracht sein, während die von dem erfindungsgemäßen bahnförmigen Produkt nicht abgedeckten Seite von einer Klebstoffschicht, die streifenförmig ausgebildet sein kann, abgedeckt ist. Selbstverständlich besteht auch die Möglichkeit, dass das erfindungsgemäße bahnförmige Produkt unmittelbar mit einer Klebstoffschicht oder mit Klebstoffstreifen verbunden ist, um an einem Bauwerk, wie Dachunterkonstruktion, befestigt zu werden.

Auch kann zwischen der den ersten Füllstoff enthaltenden Schicht und einer diese abdeckenden bauwerksfernliegenden Schicht eine Einlage bzw. Verstärkung aus z.B. Glas und/oder Polyester verlaufen.

Als Rohstoff für den Füllstoff wird z.B. konventioneller Hausmüll eingesetzt. Aber auch Industriemüll kann zur Anwendung gelangen, sofern die Bestandteile in technisch und energetisch vertretbarer Weise ein Granulat bilden können, das gemahlen wird, um Korngrößen zu erzielen, die eine Körnung aufweisen sollten, wie diese von den im Stand der Technik zum Einsatz gelangenden Füllstoffen in Form von Kreide und/oder Talkum bekannt ist.

Die Verwendung von einem entsprechenden Müll als Ausgangsbasis hat den Vorteil, dass ein eigenes Sammelsystem nicht erforderlich ist und auf kommunale und industrielle Müllentsorgungsunternehmen zurückgegriffen werden kann. Dabei kann insbesondere auch ein aufbereiteter Müll Verwendung finden, wie dieser der EP 1 863 620 B1, der WO 2012/007949 A1 oder der WO 2010/082202 A2 zu entnehmen ist, auf deren Offenbarungsgehalt ausdrücklich Bezug genommen wird und die in Bezug auf die beanspruchten Abfallstoffe eine ergänzende Offenbarung darstellen.

Insbesondere zeichnet sich die Erfindung durch ein- oder mehrschichtiges bahnförmiges Produkt aus, insbesondere Abdeckbahn für einen Bauwerksbereich, wie Dach, Keller, Becken, bestehend aus oder enthaltend eine Deckbahn mit zumindest einem ersten Füllstoff, wobei der erste Füllstoff aus zerkleinerten heterogenen Abfallstoffen aus Haushalt und/oder Industrie besteht oder diese enthält.

Dabei ist insbesondere vorgesehen, dass die Deckbahn mindestens ein Polymer und/oder einen Kunststoff enthält.

Auch zeichnet sich die Erfindung aus durch ein Verfahren zur Herstellung eines bahnförmigen Produkts oder einer Schicht von diesem, insbesondere Abdeckbahn für einen Bauwerksbereich, wie Dach, Keller, Becken, bestehend aus oder enthaltend eine Deckbahn mit zumindest einem ersten Füllstoff, umfassend zumindest die Verfahrensschritte
a) Mischen von zumindest heterogenen Abfallstoffen aus Haushalt und/oder Industrie, enthaltend zumindest Bioabfall,
b) Erhitzen und Trocknen der Mischung,
c) Herstellen eines Granulats zur Bildung eines ersten Materials,
d) ggf. Mahlen des Granulats des ersten Materials,
e) ggf. Sieben des ersten Materials
f) Mischen des ersten Materials mit einem mehrere Substanzen aufweisenden zweiten Material, die zusammen das Produktmaterial bilden, und
g) Extrudieren des Produktmaterials, um anschließend insbesondere durch Kalandrieren das bahnförmige Produkt oder eine Schicht von diesem zur Verfügung zu stellen.

Dabei kann die Deckbahn eine Polymermatrix oder eine Bitumenmatrix enthalten.

Insbesondere zeichnet sich die Erfindung aus durch ein mehrschichtiges bahnförmiges Produkt, insbesondere Abdeckbahn für einen Bauwerksbereich, wie Dach, Keller, Becken, enthaltend eine Deckbahn mit zumindest einem ersten Füllstoff, der aus zerkleinerten heterogenen Abfallstoffen aus Haushalt und/oder Industrie besteht oder diese enthält, wobei die Deckschicht von zwei Schichten abgedeckt und von diesen eingekapselt ist.

Auch zeichnet sich die Erfindung aus durch ein ein- oder mehrschichtiges bahnförmiges Produkt, insbesondere Abdeckbahn für einen Bauwerksbereich, wie Dach, Keller, Becken, bestehend aus oder enthaltend eine Deckbahn mit zumindest einem ersten Füllstoff, der aus zerkleinerten heterogenen Abfallstoffen aus Haushalt und/oder Industrie besteht oder diese enthält, wobei die Abfallstoffe vorsortiert sind, wobei asbesthaltige Baustoffe, teer- und bitumenhaltige Baustoffe, kontaminierter Erdaushub aussortiert sind.

Bezieht sich die erfindungsgemäße Lehre bevorzugt auf eine eine Polymermatrix enthaltene Deckbahn, so gilt die erfindungsgemäße Lehre jedoch gleichfalls auch für eine Deckbahn mit einer Bitumenmatrix.

Auch zeichnet sich der Erfindung dadurch aus, dass der erste Füllstoff eine Dichte ρ mit 1,0 g/cm³ ≤ ρ ≤ 1,6 g/cm³ aufweist und /oder dass der Anteil in Gew.-% des ersten Füllstoffs in der Deckbahn bzw. in der Schicht, in der der erste Füllstoff enthalten ist, zwischen 0,1 und 10, insbesondere zwischen 3 und 5, liegt.

Ist die Deckbahn mehrschichtig, so bezieht sich der Gewichtsanteil auf die Schicht, in der der erste Füllstoff enthalten ist.

Besonders hervorzuheben ist, dass die Deckbahn bzw. Schicht den ersten Füllstoff sowie einen zweiten Füllstoff in Form eines anorganischen oder mineralischen Füllstoffs oder Ruß, insbesondere Kreide und/oder Kaolin und/oder Talkum und/oder Ruß enthält. Mit anderen Worten sind in der Schicht sowohl der erste als auch der zweite Füllstoff enthalten.

Gegenstand der Erfindung ist auch eine Verwendung des ersten Füllstoffs entsprechend einer oder mehrerer zuvor erfolgter Charakterisierungen als Füllstoff anstelle eines Füllstoffs, der Polymer der Matrix einer Deckbahn oder Schicht eines bahnförmigen Produkts ersetzt.

Weitere Einzelheiten, Vorteile und Merkmale der Erfindung ergeben sich nicht nur aus den Ansprüchen, den diesen zu entnehmenden Merkmalen - für sich und/oder in Kombination - sondern auch aus der nachfolgenden Beschreibung von bevorzugten Beispielen, wobei auch in Kombination beschriebene Merkmale für sich erfinderisch sind.

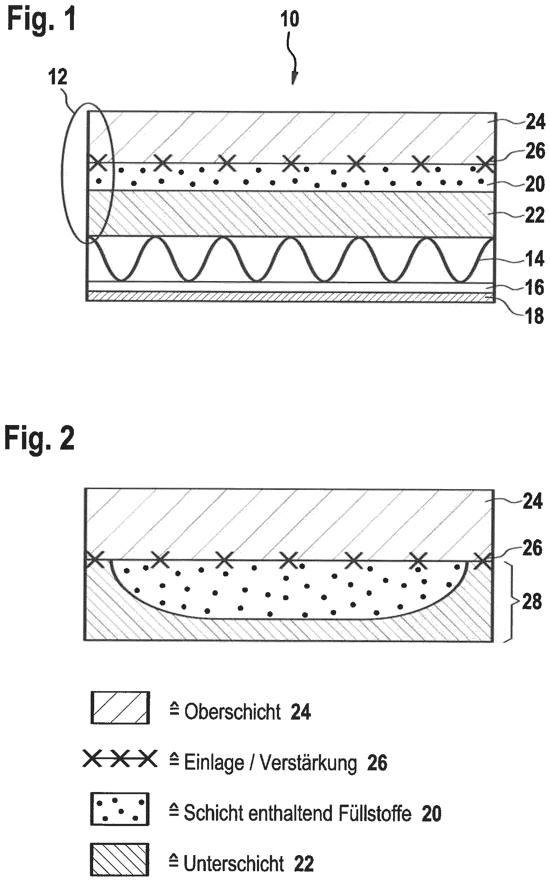

In Fig. 1 ist ein Abdeckschichtsystem 10 in Form einer kaschierten selbstklebenden Dachbahn dargestellt, die aus einer Deckschicht 12 besteht bzw. eine solche aufweist, welche im Ausführungsbeispiel mehrschichtig aufgebaut ist und aus einer Oberschicht 24, einer Verstärkungsschicht 26 in Form einer Einlage bzw. Verstärkung aus Glas und/oder Polyester, einer Mittelschicht 20 und einer Unterschicht 22 besteht. Das Abdeckschichtsystem 10 weist ferner eine Vliesschicht 14, eine Klebeschicht 16 auf, die ihrerseits von einer Schutzfolie 18 abgedeckt ist. Die Verstärkungsschicht 26 ist nicht zwingend.

Die den erfindungsgemäßen ersten Füllstoff enthaltende Mittelschicht 20, die eine Zusammensetzung zuvor beschriebener Art aufweisen kann, insbesondere der Rezeptur einer PVC-P-, TPE-, ECB-, EVA-, FPO-, PIB- oder EPDM-Bahn entspricht, kann nicht nur ober- und unterseitig, sondern auch in ihren Rändern von der zweiten und dritten Schicht, also der Unterschicht 22 und der Oberschicht 24 abgedeckt, also eingekapselt sein, um ein Eindringen von Feuchtigkeit in die als erste Schicht zu bezeichnende Mittelschicht 20 auszuschließen.

Eine beispielhafte Darstellung ist der Fig. 2 zu entnehmen.

Basis des ersten Füllstoffs der ersten Schicht oder Mittelschicht 20 sind heterogene Abfallstoffe aus Haushalt und/oder Industrie, die vorzugsweise zumindest Kunststoff sowie zumindest ein oder mehrere Materialien aus der Gruppe Bioabfall, wie Nahrungsmittel, Küchenabfall, Hygieneprodukte, wie Windeln, enthalten. Unter Bioabfall fallen auch nachwachsende Rohstoffe wie biologische Fasern von Bananen, aber auch Holzfasern. Ferner ist insbesondere vorgesehen, dass die erste Schicht 20 Siliziumdioxid, metallische Partikel, wie Aluminiumfolienabschnitte, oder Textilfasern enthält.

Die zum Einsatz gelangenden heterogenen Abfallstoffe können aus vorsortiertem Müll stammen, wobei Schadstoffe, die insbesondere unter die REACH-Verordnung der Europäischen Union fallen, oder Metallpartikel entfernt sind, die ein energetisch günstiges Verarbeiten zu einem Granulat nicht oder nur schwer ermöglichen.

Zur Herstellung der ersten Schicht 20 werden die heterogenen Abfallstoffe erhitzt, kompaktiert, granuliert und sodann gemahlen, um eine Korngröße von ≤ 1 mm, besonders bevorzugt von ≤ 250µm zu erhalten.

Vorhandene Fasern weisen Längen auf, die im Bereich der Kurzfasern, also 0,1 bis 1,0 mm, liegen.

Das gemahlene erste Material, also der heterogene Abfall, wird in zuvor beschriebener Art - ggf. nach zuvor hergestelltem Masterbatch - mit den weiteren Substanzen, die für die Mittelschicht eingesetzt werden, gemischt und sodann mittels eines Extruders extrudiert, wobei Verarbeitungstemperaturen im Bereich zwischen 160 °C und 200 °C, bevorzugt zwischen 175 °C und 195 °C herrschen können. Das extrudierte Material kann sodann im Kalandrierverfahren von der zweiten und dritten Schicht 22, 24 umgeben bzw. umkapselt werden, wobei das Material der Schichten 22, 24 gleichfalls extrudiert sein kann. Gegebenenfalls können durch Koextrusion die Schichten 20, 22, 24 bzw. die Ausgangsmaterialien für diese gebildet werden.

Der Anteil des erfindungsgemäßen ersten Füllstoffs in der ersten Schicht 20 sollte maximal 10 Gew.-% betragen.

Die zweite und dritte Schicht 22, 24 kann entsprechend einer PCV-P-Bahn als Hauptbestandteil PVC aufweisen, wobei der Anteil zwischen 40 und 57 Gew.-% liegen kann. Ferner enthält das Material der zweiten und dritten Schicht einen Weichmacher, insbesondere eine niedermolekularen Weichmacher mit einem Anteil von 25 bis 45 Gew.-%. Die sonstigen Stoffe haben einen Anteil von maximal 20 Gew.-%,

Als Materialien für die Oberschicht 24 und die Unterschicht 22 kommen solche in Frage, wie diese für Abdeckbahnen gemäß der eingangs genannten Anwendungsnormen bekannt sind.

Um festzustellen, in welchem Umfang der erfindungsgemäße erste Füllstoff, der aus heterogenem Abfallstoffen besteht, die Eigenschaften einer Abdeckbahn für einen Bauwerksbereich beeinflusst, wurden Vergleichsversuche durchgeführt.

Eine erste Probe setzte sich aus den der Tabelle 1 zu entnehmenden Bestandteilen zusammen (Probe 1). Eine zweite Probe (Probe 2) wurde mit den gleichen Rezepturbestandteilen wie die Probe 1 mit der Einschränkung hergestellt, dass anstelle des Füllstoffs Kreide gemahlene heterogene Abfallstoffe verwendet wurden. Der Gewichtsanteil war identisch, wie der Tabelle 1 zu entnehmen ist.

**Tabelle 1:**

| Rezepturbestandteile [%] | Darreichungsform | Aufgabe | Probe 1 | Probe 2 |
|---|---|---|---|---|
| PVC | Pulver | Polymermatrix | 40-50 | |
| Polymerer Weichmacher | Flüssig | Weichmacher | 25-34 | |
| Monomerer Weichmacher | Flüssig | Weichmacher | 1-5 | |
| Biozid | Flüssig | Biozid | 0-2 | |
| Ca/Zn Stabilisator | Pulver | Stabilisator | 1-5 | |
| Acrylat | Pulver | Schlagzähmodifier | 4-12 | |
| ESO (Epoxidiertes Sojabohnenöl) | Flüssig | Co-Stabilisator, Co-Weichmacher | 1-5 | |
| Titandioxid | Pulver | UV-Stabilisator, Farbpigment | 2-6 | |
| UV-Stabi | Pulver | UV-Stabi | 0,1-2,5 | |
| Pigmentmischung schwarz | Pulver | Farbpigmente | 0,2-0,5 | |
| Kreide | Pulver | Füllstoff | 3,21 | |
| Erfindungsgemäßer Füllstoff | Granulat | Füllstoff | | 3,21 |
| Summe | | | 100,00 | 100,00 |

Die gemahlenen heterogenen Abfallstoffe, nachstehend erster Füllstoff genannt, wiesen einen Reinheitsgrad auf, der gemäß der REACH-Verordnung der Europäischen Union definiert ist. Die Bestandteile des ersten Füllstoffs wurden mit Differential Scanning Calometry, Schwingungsspektroskopie (FT-IR, Fourier-Transform-Infrarot), Veraschung/Glührückstand bei 750 °C und nachfolgender REM (EDX) Betrachtung, Mikroskopie, RFA-Analyse ermittelt.

Dabei konnten als Kunststoffanteile verschiedene PE Typen und PP gefunden und detektiert werden. Weitere chemische Elemente wie Aluminium, Natrium, Magnesium, Calcium, Chlor, Magnesium, Kohlenstoff, Silizium und Sauerstoff konnten festgestellt werden, welche z.B. einen Hinweis auf Kreide (CaCO₃), auf Quarz und/oder Kieselsäure (SiO₂), Aluminiumfolie/-blech geben. Weiterhin wurden Fasern biologischen Ursprungs von Bananenschalen und Holzfasern, Textilfasern, Acetaldehyd, Aceton, Pentanal ermittelt.

Der erste Füllstoff wurde als Granulat zur Verfügung gestellt, das zunächst vorgetrocknet wurde, und zwar über einen Zeitraum von ca. 2 Stunden bei einer Temperatur von ca. 60 °C. Sodann wurde das Granulat zermahlen, um Partikelgrößen ≤ 1mm zu erhalten.

Der gemahlene erste Füllstoff wurde bei einer Temperatur > 80 °C der PVC Mischung während des Dry-Blend-Verfahren im Heißmischer zugegeben, wobei der Mischung auch die weiteren Bestandteile zugegeben worden sind. Erhaltene Pulvermischung bzw. Dry-Blend Mischung wurde anschließend bis Temperaturen < 130 °C gemischt.

Sodann wurde die Mischung abgekühlt auf Temperaturen < 55 °C. Das zur Verfügung gestellte Dry-Blend wurde anschließend in einem Extruder im Temperaturbereich zwischen 170 °C und 195 °C verarbeitet, um anschließend die Masse über Breitschlitzdüse zu extrudieren und zu kalandrieren.

Der Tabelle 2 sind die Messungen an kalandrierten Bahnen, die aus den Proben 1 und 2 hergestellt worden sind, hinsichtlich mechanischer Eigenschaften zu entnehmen. Man erkennt, dass durch den Ersatz des Füllstoffs Kreide durch die gemahlenen heterogenen Abfallstoffe die mechanischen Eigenschaften sich nicht wesentlich verändert haben, in Bezug auf die Maßhaltigkeit sogar zu besseren Ergebnissen führten.

Festgestellt wurden Farbabweichungen zwischen den Proben. Um diese auszugleichen, können entsprechend geänderte Pigmentmischungen Verwendungen finden.

**Tabelle 2:**

| Prüfungsübersicht | | | | |
|---|---|---|---|---|
| **Eigenschaften** | **Prüfmethode** | **Maß-einheit** | **Ergebnisse** | |
| | | | **Probe 1** | **Probe 2** |
| Äußere Beschaffenheit | EN 1848-2 | - | ok | ok |
| Länge | EN 1848-2 | m | 20 | 20 |
| Breite | EN 1848-2 | m | 1.110 | 1.107 |
| Effektive Dicke | EN 1849-2 | mm | 1.50 | 1.50 |
| Flächengewicht | EN 1849-2 | kg/m² | 2.052 | 2.054 |
| Reißfestigkeit | EN 12311-2/B | N/mm² | Längs 16 | Längs 13 |
| | | | Quer 14 | Quer 11 |
| Reißdehnung | EN 12311-2/B | % | Längs 310 | Längs 305 |
| | | | Quer 357 | Quer 308 |
| Weiterreißwiderstand | EN 12310-2 | N | Längs 98 | Längs 103 |
| | | | Quer 120 | Quer 123 |
| Weiterreißwiderstand Nagelschaft | EN 12310-1 | N | Längs 235 | Längs 266 |
| | | | Quer 251 | Quer 257 |
| Scherfestigkeit der Fügenaht | EN 12317-2 | N/50 mm | Ø 729, Abriss außerhalb der Fügenaht | Ø 682, Abriss außerhalb der Fügenaht |
| Schälfestigkeit der Fügenaht | EN 12316-2 | N/50 mm | Ø 338, Materialzerstörung | Ø 318, Materialzerstörung |
| Perforation | EN 12691 | mm | Hard 800 | Hard 800 |
| | | | Soft 1500 | Soft 1500 |
| Maßhaltigkeit | EN 1107-2 | % | Links -2,74 | Links -1,29 |
| | | | Mitte -2,22 | Mitte -1,54 |
| | | | Rechts -2,17 | Rechts -1,05 |
| Beständigkeit gegen statische Belastung | EN 12730/B | kg/m² | erfüllt | erfüllt |
| UV Bewitterung | EN 1297 | Visuell | nach 6.000 h QUV-A: keine Risse erkennbar | |
| Gewichtsverlust nach 6.000 h QUV-A Bewitterung | EN 1297 | % | 2,97 | 3,06 |

Beim QUV-Test werden die von Sonnenlicht, Regen und Tau verursachten Schäden reproduziert.

Zu dem Gewichtsverlust ist anzumerken, dass dieser bei der Probe 1 geringer als bei der den erfindungsgemäßen Füllstoff enthaltenen Probe 2 war. Dies lässt den Schluss zu, dass der erfindungsgemäße Füllstoff weniger aus der Probe ausgewaschen wurde als die Kreide in der Probe 1.

In einer weiteren Untersuchung wurden die Materialien der Probe 1 und Probe 2 miteinander verschweißt unter Benutzung eines Leister Varimats V2 und Standardeinstellungen von 520°C, 2,1 m/min, um die Fügenahtfestigkeit bzw. den Einfluss des Einsatzes des erfindungsgemäßen Füllstoff zu verifizieren. Ergebnisse zeigten eine problemlose Verschweißung:
a) Scherfestigkeit der Fügenaht (EN 12317-2) - Ø 796 N/50 mm, Abriss außerhalb der Fügenaht
b) Schälfestigkeit der Fügenaht (EN 12316-2) - Ø 236 N/50 mm, Materialzerstörung

Die Ergebnisse zeigen keinen negativen Einfluss im Vergleich mit den verschweißten Bahnen der Probe 1 und Probe 2 wie in Tabelle 2 beschrieben.

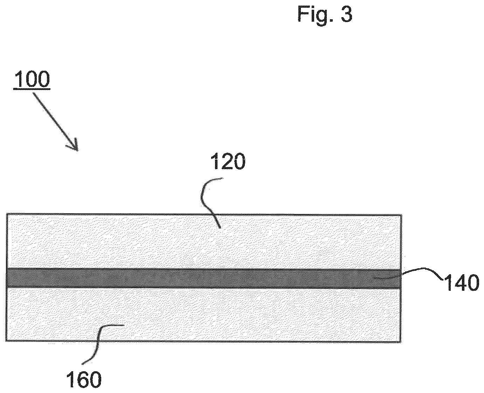

In einem weiteren Versuch wurden mehrschichtige Dachbahnen 100 (Fig. 3) jeweils mit einer Dicke von 1,5 mm hergestellt, die aus einer Oberschicht 120, einer Verstärkungseinlage 140 aus einem Glasgewebe und einer Unterschicht 160 bestanden. Eine Dichtungsbahn (Probe 3) wies in Bezug auf die Ober- und Unterschicht folgende Zusammensetzung auf

**Tabelle 3:**

| Rezepturbestandteile [%] | Darreichungform | Aufgabe | Oberschicht von Probe 3 + Probe 4 | Probe 3 Unterschicht | Probe 4 Unterschicht |
|---|---|---|---|---|---|
| S-PVC, K70 | Pulver | Polymermatrix | 40-50 | 40-50 | 40-50 |
| Polymerer WM | Flüssig | Weichmacher | 25-34 | 25-34 | 25-34 |
| Monomerer WM | Flüssig | Weichmacher | 1-5 | 1-5 | 1-5 |
| Biozid | Flüssig | Biozid | 0-2 | 0-2 | 0-2 |
| Ca/Zn Stabilisator | Pulver | Stabilisator | 1-5 | 1-5 | 1-5 |
| Acrylat | Pulver | Schlagzähmodifier | 4-12 | 0-4 | 0-4 |
| ESO (Epoxidiertes Sojabohnenöl) | Flüssig | Co-Stabi, Co-Weichmacher | 1-5 | 1-5 | 1-5 |
| Titandioxid | Pulver | UV-Stabi, Farbpigment | 2-6 | 2-6 | 2-6 |
| UV-Stabi | Pulver | UV-Stabi | 0.1-2.5 | 0-2.5 | 0-2.5 |
| Pigmentmischung schwarz | Pulver | Farbpigmente | 0.2-0.5 | 0.2-0.5 | 0.2-0.5 |
| Kreide | Pulver | Füllstoff | 3.21 | 7 | 3.5 |
| Erfindungsgem. Füllstoff | Granulat | Füllstoff | | | 3.5 |

Eine einer Probe 4 entsprechende Dachbahn war hinsichtlich der Oberschicht und der Verstärkungseinlage wie die Probe 3 gleich aufgebaut und wies die gleiche Zusammensetzung auf. Die Unterschicht ist nach einer erfindungsgemäßen Lehre ausgebildet, wies folglich den erfindungsgemäßen ersten Füllstoff sowie ergänzend den zweiten Füllstoff in Form von Kreide auf.

Zur Herstellung der aus dem ersten und zweiten Füllstoff bestehenden Füllstoffmischung wurde aus dem ersten Füllstoff mit einem aus PVC bestehenden Trägermaterial ein Masterbatch-Material hergestellt. Aus dem zweiten Füllstoff, der Kreide, und gleichfalls PVC als Trägermaterial wurde ein zweites Granulat produziert. Das Masterbatch-Granulat und das zweite Granulat wurden sodann zu einem Hybrid-Granulat gemischt. Durch Sieben des Hybrid-Granulats wurde eine einheitliche Granulatform erzielt. Das Hybrid-Granulat wurde mit den weiteren die Unterschicht bildenden Rezepturbestandteilen gemischt und sodann auf die Verstärkungseinlage (mittlere Schicht) extrudiert.

Wie sich aus der Tabelle 3 ergibt, konnten keine Unterschiede zwischen der Probe 3 und der Probe 4 festgestellt werden.

**Tabelle 4:**

| Rezepturbestandteile [%] | Darreichungsform | Aufgabe | Probe 3 | Probe 4 |
|---|---|---|---|---|
| Kreide | Pulver | Füllstoff | 7,0 | 3,50 |
| 1. Füllstoff | Granulat | Füllstoff | | 3,50 |

| **ITT (Initial type test) - anhand der kompletten Bahn** | | | | | |
|---|---|---|---|---|---|
| **Eigenschaften** | **Prüfmethode** | **Maßeinheit** | **Ergebnisse** | | |
| | | | **Probe 3** | **Probe 4** | **Erklärung/ Bewertung** |
| Äußere Beschaffenheit | EN 1848-2 | - | ok | ok | |
| Effektive Dicke | EN 1849-2 | mm | 1,53 | 1,53 | |
| Flächengewicht | EN 1849-2 | kg/m² | 1,99 | 1,96 | |
| Fmax (1g/qu) | EN 12311-2/B | N/50 mm | 797,0 | 821,0 | |
| | | | 827,0 | 838,0 | keine Unterschiede erkennbar, kein negativer Einfluss des erfindungsgemäßen ersten Füllstoffs |
| Dehnung bei Fmax (1g/qu) | EN 12311-2/B | % | 2,0 | 2,8 | |
| | | | 3,0 | 3,1 | |
| E-Modul | EN 12311-2/B | N/mm² | 9,30 | 9,30 | |
| Weiterreißwiderstand | EN 12310-2 | N | 226 | 220 | |
| | | | 207 | 230 | |
| Weiterreißwidersta nd Nagelschaft | EN 12310-1 | N | 585 | 550 | |
| | | | 615 | 679 | |
| Scherfestigkeit der Fügenaht | EN 12317-2 | N/50 mm | 856, Bruch außerhalb der Fügenaht | 748, Bruch außerhalb der Fügenaht | Versagensart wichtig, hier beide erfüllt |
| Schälfestigkeit der Fügenaht | EN 12316-2 | N/50 mm | 684, Materialzerst örung | 593, Materialzerstöru ng | |
| Perforation | EN 12691 | mm | Alu = 600, EPS = 1250 | Alu = 600, EPS = 1250 | kein Unterschied erkennbar |
| Wasseraufnahme | UEAtc | % | 0,30 | 0,30 | kein negativer Einfluss des erfindungsgemäßen ersten Füllstoffs erkennbar |

Die Schweißbedingungen bei der Schälfestigkeit und der Scherfestigkeitsprüfung waren 520 °C, 3,3 m/min, Varimat V2 wurde als Schweißautomat bei den Versuchen benutzt.

Rasterelektromikroskopaufnahmen (REM) haben ergeben, dass die Verteilung der Füllstoffe der Probe 3 und der Probe 4 gleich verteilt waren, d.h. es gibt keine chemische oder physikalische Wechselwirkung mit der Polymermatrix. In den Aufnahmen zeigt sich außerdem, dass der erfindungsgemäße erste Füllstoff nicht herausgewaschen wird. Demgegenüber wird bei manchen Anwendungsfällen der Füllstoff aus der Gruppe Kreide, Kaolin herausgewaschen.

Gegenstand ist auch ein ein- oder mehrschichtiges bahnförmiges Produkt (10), insbesondere Abdeckbahn für einen Bauwerksbereich, wie Dach, Keller, Becken, bestehend aus oder enthaltend eine Deckbahn (20) bzw. Schicht mit zumindest einem ersten Füllstoff, wobei der erste Füllstoff aus zerkleinerten heterogenen Abfallstoffen aus Haushalt und/oder Industrie besteht oder diese enthält.

Auch zeichnet sich die Erfindung dadurch aus, dass die Deckbahn (20) bzw. Schicht eine Polymermatrix enthält.

Auch zeichnet sich die Erfindung dadurch aus, dass die Deckbahn (20) bzw. Schicht eine Bitumenmatrix enthält.

Auch zeichnet sich die Erfindung dadurch aus, dass die Deckbahn (20) bzw. Schicht den ersten Füllstoff sowie einen zweiten Füllstoff in Form eines anorganischen oder mineralischen Füllstoffs oder Ruß, insbesondere Kreide und/oder Kaolin und/oder Talkum und/oder Ruß, enthält.

Auch zeichnet sich die Erfindung dadurch aus, dass der aus dem Abfallstoff bestehende oder enthaltende erste Füllstoff zumindest ein Material, vorzugsweise mehrere Materialien, aus der Gruppe nativ-organische Abfälle, trockene Werkstoffe, Restabfall, Feinmüll (Korngröße vorzugsweise ≤ 10 mm) enthält.

Auch zeichnet sich die Erfindung dadurch aus, dass der aus dem Abfallstoff bestehende oder enthaltende erste Füllstoff zumindest ein Material oder mehrere Materialien aus der Gruppe Bioabfall, wie Nahrungs- und Küchenabfall, Hygieneprodukte, wie Windeln, Kunststoff enthält.

Auch zeichnet sich die Erfindung dadurch aus, dass der Abfallstoff eine Korngröße ≤ 1 mm, bevorzugt < 250 µm, aufweist.

Auch zeichnet sich die Erfindung dadurch aus, dass der Abfallstoff Fasern einer Länge enthält, die im Bereich der Kurzfasern ≤ 1 mm liegt, insbesondere mehr als 90 % der Fasern eine entsprechende Länge aufweisen.

Auch zeichnet sich die Erfindung dadurch aus, dass der erste Füllstoff eine Dichte ρ mit 1,0 g/cm³ ≤ ρ ≤ 1,6 g/cm³ aufweist.

Auch zeichnet sich die Erfindung dadurch aus, dass Glührückstand des ersten Füllstoffs bei 750 °C beträgt 7,75 % bis 7,90 %, insbesondere 7,80 % bis 7,85 %.

Auch zeichnet sich die Erfindung dadurch aus, dass der erste Füllstoff enthält nachwachsende Rohstoffe, wie biologische Fasern, vorzugsweise von Bananen, Holzfasern, Kieselsäure und ggf. metallische Partikel, wie Aluminiumfolienabschnitte.

Auch zeichnet sich die Erfindung dadurch aus, dass der erste Füllstoff aus unsortiertem Abfall besteht oder diesen enthält.

Auch zeichnet sich die Erfindung dadurch aus, dass das bahnförmige Produkt (10, 12) aus mehreren Schichten (20, 22, 24) besteht, dass die den ersten Füllstoff enthaltende Schicht von zumindest einer Schicht (22, 24) abgedeckt ist, insbesondere von zwei Schichten abgedeckt und von diesen eingekapselt ist.

Auch zeichnet sich die Erfindung dadurch aus, dass der Anteil in Gew.-% des ersten Füllstoffs in der Deckbahn (20) zwischen 0,1 und 10, insbesondere zwischen 3 und 5, liegt.

Auch zeichnet sich die Erfindung dadurch aus, dass der die heterogenen Abfallstoffe enthaltende oder aus diesen bestehende erste Füllstoff in Abdeckschichten im Bauwerksbereich vorhandenen Füllstoff insbesondere in Form von Kreide und/oder Talkum und/oder Kaolin und/oder Ruß zumindest teilweise ersetzt.

Auch zeichnet sich die Erfindung dadurch aus, dass die heterogene Abfallstoffe mehrere Materialien aus der Gruppe Bioabfall, Hygieneprodukt, Kunststoff, Feinmüll, Altpapier, Altglas, Verbundmaterial, Steine, Sand, Textilien, Metall enthalten oder aus diesen bestehen.

Auch zeichnet sich die Erfindung dadurch aus, dass die heterogenen Abfallstoffe vorsortierte Abfallstoffe sind.

Auch zeichnet sich die Erfindung dadurch aus, dass die vorsortierten Abfallstoffe derart vorsortiert sind, dass die Abfallstoffe der REACH-Verordnung der Europäischen Union entsprechen.

Auch zeichnet sich die Erfindung dadurch aus, dass die vorsortierten Abfallstoffe derart vorsortiert sind, dass asbesthaltige Baustoffe, teer- und bitumenhaltige Baustoffe, kontaminierter Erdaushub aussortiert ist.

Auch zeichnet sich die Erfindung dadurch aus, dass das Produktmaterial unter Ausnahme des ersten Füllstoffs enthält zumindest ein Material aus der Gruppe PVC (Polyvinylchlorid), TPE (Thermoplastisches Elastomer), TPO (Thermoplastischer Elastomer auf Olefinbasis) oder FPO (Flexibles Polyolefin), TPV (Thermoplastisches Vulkanisat), EPDM (Ethylen-Propylen-Dien-Kautschuk), EVA (Ethylenvinylacetat), Fluorpolymere oder sonstige übliche Werkstoffe wie beispielsweise angegeben in DIN SPEC 20000-201:2015-08.

Auch zeichnet sich die Erfindung dadurch aus, dass das Produktmaterial, aus dem die Deckschicht (12) oder eine Schicht (20) dieser besteht, in Gew.-% zumindest enthält bei PVC-P als Polymermatrix: PVC ≥ 40, Weichmacher ≤ 40, weitere Materialien ≤ 20 enthaltend den ersten Füllstoff oder TPE als Polymermatrix: TPE ≥ 50, weitere Materialien ≤ 50 enthaltend den ersten Füllstoff oder
ECB als Polymermatrix: Butylacrylat-Copolymer ≥ 25, Bitumen ≥ 25, weitere Materialien ≤ 30 enthaltend den ersten Füllstoff oder EVA (oder EVAC) als Polymermatrix: Ethylen-Vinylacetat (EVA) ≥ 25, Polyvinylchlorid (PVC) ≤ 50, weitere Materialien ≤ 30 enthaltend den ersten Füllstoff oder FPO als Polymermatrix: Flexibles Polyolefin (FPO) ≥ 30, weitere Materialien ≤ 70 enthaltend den ersten Füllstoff oder PIB als Polymermatrix: Hochmolekulares Polyisobutylen (PIB) ≥ 30, weitere Materialien ≤ 80 enthaltend den ersten Füllstoff oder EPDM als Polymermatrix: EPDM-Elastomer ≥ 30, weitere Materialien ≤ 75 enthaltend den ersten Füllstoff.

Auch zeichnet sich die Erfindung dadurch aus, dass der Weichmacher ein monomerer Weichmacher, ein biobasierter Weichmacher, ein linearer Weichmacher, ein polymerer Weichmacher oder eine Kombination dieser ist.

Auch zeichnet sich die Erfindung dadurch aus, dass die heterogenen Abfallstoffe als Kunststoff zumindest ein Material aus der Gruppe der Thermoplasten bzw. Thermoplastischen Kunststoffe wie synthetisches Polyolefin, wie Polyethylen Hart-Polyethylen (HDPE), Weich-Polyethylen (LDPE), lineares Polyethylen niedriger Dichte (LLPE), Polypropylen (PP), Polystyrol (PS), wie hochschlagfestes Polystyrol (HIPS), Polyvinylchlorid (PVC), Hart-PVC, Weich-PVC, Polyurethan (PU), Polyamid (PA), Ethylen-Vinylalkohol-Copolymere (EVOH), Acrylnitril-Butadien-Styrol (ABS) enthält.

Gegenstand ist auch ein Verfahren zur Herstellung eines bahnförmigen Produkts (10) oder einer Schicht (20) von diesem, insbesondere Abdeckbahn für einen Bauwerksbereich, wie Dach, Keller, Becken, bestehend aus oder enthaltend eine Deckbahn mit zumindest einem ersten Füllstoff, insbesondere nach zumindest einem der vorhergehenden Ansprüche, umfassend zumindest die Verfahrensschritte
a) Mischen von zumindest heterogenen Abfallstoffen aus Haushalt und/oder Industrie zur Verwendung als den ersten Füllstoff,
b) vorzugsweise Erhitzen und Trocknen der Mischung,
c) Herstellen eines Granulats zur Bildung eines ersten Materials,
d) ggf. Mahlen des Granulats des ersten Materials,
e) ggf. Sieben des ersten Materials
f) Mischen zumindest des ersten Materials mit einem mehrere Substanzen aufweisenden zweiten Material, die zusammen das Produktmaterial bilden, und
g) Extrudieren des Produktmaterials, um anschließend insbesondere durch Kalandrieren das bahnförmige Produkt oder eine Schicht von diesem zur Verfügung zu stellen.

Auch zeichnet sich die Erfindung dadurch aus, dass vor dem Verfahrensschritt f) das erste Material mit einem zweiten Füllstoff in Form eines anorganischen oder mineralischen Füllstoffs, insbesondere Kreide und/oder Kaolin und/oder Talkum, und/oder Ruß gemischt wird.

Auch zeichnet sich die Erfindung dadurch aus, dass als zweites Material ein solches verwendet wird, das ein Polymermatrix enthält.

Gegenstand ist auch ein Verfahren zur Herstellung eines bahnförmigen Produkts (10) oder einer Schicht (20) von diesem, insbesondere Abdeckbahn für einen Bauwerksbereich, wie Dach, Keller, Becken, bestehend aus oder enthaltend eine Deckbahn mit zumindest einem ersten Füllstoff, insbesondere nach zumindest einem der vorhergehenden Ansprüche, umfassend zumindest die Verfahrensschritte
A) Mischen von zumindest heterogenen Abfallstoffen aus Haushalt und/oder Industrie zur Verwendung als den ersten Füllstoff,
B) vorzugsweise Erhitzen und Trocknen der Mischung,
C) Herstellen eines Granulats zur Bildung eines ersten Materials,
D) ggf. Mahlen des Granulats des ersten Materials,
E) ggf. Sieben des ersten Materials
F) Mischen des ersten Materials mit einem Trägermaterial, insbesondere Kunststoff, und Granulieren, insbesondere Extrudieren oder Compoundieren und anschließendes Granulieren, zur Herstellung eines Masterbatch-Granulats,
G) Mischen des Masterbatch-Granulats mit einem mehrere Substanzen enthaltenden dritten Material, die zusammen das Produktmaterial bilden,
H) Extrudieren des Produktmaterials, um anschließend insbesondere durch Kalandrieren das bahnförmige Produkt oder eine Schicht von diesem zur Verfügung zu stellen.

Auch zeichnet sich die Erfindung dadurch aus, dass vor dem Verfahrensschritt G) ein weiteres Granulat hergestellt oder dass ein weiteres Granulat benutzt wird, das einen zweiten Füllstoff in Form eines anorganischen oder mineralischen Füllstoffs oder Ruß, insbesondere Kreide und/oder Kaolin und/oder Talkum und/oder Ruß, enthält und sodann mit dem Masterbatch-Granulat zur Herstellung eines Hybrid-Granulats gemischt wird und dass im Verfahrensschritt G) das Hybrid-Granulat mit dem dritten Material gemischt wird.

Auch zeichnet sich die Erfindung dadurch aus, dass das dritte Material eine Polymermatrix enthält und als Trägermaterial ein solches verwendet wird, das mit der Polymermatrix kompatibel ist.

Auch zeichnet sich die Erfindung dadurch aus, dass aus dem Produktmaterial eine erste Schicht (20) des bahnförmigen Produkts (12) gebildet wird und vorzugsweise von zumindest einer weiteren Schicht (22, 24) abgedeckt wird.

Auch zeichnet sich die Erfindung dadurch aus, dass die erste Schicht (20) sowohl von einer Oberschicht (24) als auch einer Unterschicht (22) abgedeckt wird.

Auch zeichnet sich die Erfindung dadurch aus, dass die erste Schicht (20) eine Mittelschicht ist, die mit der Oberschicht (24) und der Unterschicht (22) durch Koextrusion, Kalandrierverfahren oder Streichverfahren verbunden wird.

Auch zeichnet sich die Erfindung dadurch aus, dass die Mittelschicht (20) derart von der Oberschicht (24) und der Unterschicht (22) umgeben wird, dass die Mittelschicht voll umfänglich eingekapselt ist.

Auch zeichnet sich die Erfindung dadurch aus, dass das Granulat des ersten Materials bzw. Hybrid-Granulat zu einer Korngröße ≤ 1 mm, insbesondere ≤ 250 µm, gemahlen wird.

Auch zeichnet sich die Erfindung dadurch aus, dass das Granulat bzw. Hybrid-Granulat bei einer Temperatur T₁ mit T₁ ≤ 80 °C gemahlen wird.

Auch zeichnet sich die Erfindung dadurch aus, dass das erste Material bzw. Hybrid-Granulat mit dem zweiten Material bei einer Temperatur T₂ mit 170 °C ≤ T₂ ≤ 195 °C gemischt wird, insbesondere in einem Extruder.

Auch zeichnet sich die Erfindung dadurch aus, dass das Produktmaterial bei einer Temperatur T₃ mit 170 °C ≤ T₃ ≤ 195 °C kalandriert wird.

Auch zeichnet sich die Erfindung dadurch aus, dass die heterogenen Abfallstoffe vor dem Granulieren kompaktiert werden.

Auch zeichnet sich die Erfindung dadurch aus, dass das erste Material mit dem zweiten bzw. dritten Material erst dann gemischt wird, wenn in dem zweiten bzw. dritten Material vorhandener Weichmacher von dem in dem zweiten bzw. dritten Material vorhandenen Kunststoff aufgenommen ist.

Gegenstand der Erfindung ist auch die Verwendung des ersten Füllstoffs entsprechend zuvor zu entnehmender Offenbarung, ist als Füllstoff anstelle eines Füllstoffs, der Polymer der Matrix einer Deckbahn (20) oder Schicht eines bahnförmigen Produkts (10) ersetzt.

## Patentansprüche

1. Ein- oder mehrschichtiges bahnförmiges Produkt (10), insbesondere Abdeckbahn für einen Bauwerksbereich, wie Dach, Keller, Becken, bestehend aus oder enthaltend eine Deckbahn (20) bzw. Schicht mit zumindest einem ersten Füllstoff,
**dadurch gekennzeichnet,**
**dass** das bahnförmige Produkt (10) als den ersten Füllstoff zerkleinerte heterogene Abfallstoffe aus Haushalt und/oder Industrie enthält oder der erste Füllstoff aus diesen besteht, dass der erste Füllstoff vorzugsweise eine Dichte ρ mit 1,0 g/cm³ ≤ ρ ≤ 1,6 g/cm³ aufweist, und dass das bahnförmige Produkt einen zweiten Füllstoff in Form eines anorganischen oder mineralischen Füllstoffs oder Ruß enthält.

2. Bahnförmiges Produkt nach Anspruch 1,
**dadurch gekennzeichnet,**
**dass** die Deckbahn (20) bzw. Schicht eine Polymermatrix oder eine Bitumenmatrix enthält.

3. Bahnförmiges Produkt nach zumindest einem der vorhergehenden Ansprüche,
**dadurch gekennzeichnet,**
**dass** der zweite Füllstoff Kreide und/oder Kaolin und/oder Talkum und/oder Ruß enthält, und/oder dass der Gehalt des ersten Füllstoffs zu dem zweiten Füllstoff zwischen 1:1 und 4:1 liegt, wobei vorzugsweise der Anteil in Gew.-% des ersten Füllstoffs in der Deckbahn (20) zwischen 0,1 und 10, insbesondere zwischen 3 und 5, liegt, und/oder dass der erste Füllstoff aus unsortiertem Abfall besteht oder diesen enthält, oder dass die heterogenen Abfallstoffe vorsortierte Abfallstoffe sind, wobei vorzugsweise die vorsortierten Abfallstoffe derart vorsortiert sind, dass asbesthaltige Baustoffe, teer- und bitumenhaltige Baustoffe, kontaminierter Erdaushub aussortiert sind.

4. Bahnförmiges Produkt nach zumindest einem der vorhergehenden Ansprüche,
**dadurch gekennzeichnet,**
**dass** der erste Füllstoff zumindest ein Material aus der Gruppe nativ-organische Abfälle, trockene Werkstoffe, Restabfall, Feinmüll eine Korngröße von vorzugsweise ≤ 10 mm enthält, oder zumindest ein Material oder mehrere Materialien aus der Gruppe Nahrungs- und Küchenabfall, Windeln, Kunststoff enthält, und/oder dass der erste Füllstoff enthält nachwachsende Rohstoffe, wie biologische Fasern, vorzugsweise von Bananen, Holzfasern, Kieselsäure und ggf. metallische Partikel, wie Aluminiumfolienabschnitte.

5. Bahnförmiges Produkt nach zumindest einem der vorhergehenden Ansprüche, **dadurch gekennzeichnet,**
**dass** der Abfallstoff Fasern einer Länge enthält, die im Bereich der Kurzfasern ≤ 1 mm liegt, insbesondere mehr als 90 % der Fasern eine entsprechende Länge aufweisen.

6. Bahnförmiges Produkt nach zumindest einem der vorhergehenden Ansprüche, **dadurch gekennzeichnet,**
**dass** das bahnförmige Produkt (10, 12) aus mehreren Schichten (20, 22, 24) besteht, dass die den ersten Füllstoff enthaltende Schicht von zumindest einer Schicht (22, 24) abgedeckt ist, insbesondere von zwei Schichten abgedeckt und von diesen eingekapselt ist.

7. Bahnförmiges Produkt nach zumindest einem der vorhergehenden Ansprüche, **dadurch gekennzeichnet,**
**dass** der die heterogenen Abfallstoffe enthaltende oder aus diesen bestehende erste Füllstoff in Abdeckschichten im Bauwerksbereich vorhandenen Füllstoff insbesondere in Form von Kreide und/oder Talkum und/oder Kaolin und/oder Ruß zumindest teilweise ersetzt, und/oder
**dass** die heterogene Abfallstoffe mehrere Materialien aus der Gruppe Bioabfall, Hygieneprodukt, Kunststoff, Feinmüll, Altpapier, Altglas, Verbundmaterial, Steine, Sand, Textilien, Metall enthalten oder aus diesen bestehen, und/oder dass die heterogenen Abfallsstoffe als Kunststoff zumindest ein Material aus der Gruppe der Thermoplasten bzw. Thermoplastischen Kunststoffe wie synthetisches Polyolefin, wie Polyethylen Hart-Polyethylen (HDPE), Weich-Polyethylen (LDPE), lineares Polyethylen niedriger Dichte (LLPE), Polypropylen (PP), Polystyrol (PS), wie hochschlagfestes Polystyrol (HIPS), Polyvinylchlorid (PVC), Hart-PVC, Weich-PVC, Polyurethan (PU), Polyamid (PA), Ethylen-Vinylalkohol-Copolymere (EVOH), Acrylnitril-Butadien-Styrol (ABS) enthält.

8. Bahnförmiges Produkt nach zumindest einem der vorhergehenden Ansprüche, **dadurch gekennzeichnet,**
**dass** die vorsortierten Abfallstoffe derart vorsortiert sind, dass die Abfallstoffe der REACH-Verordnung der Europäischen Union entsprechen.

9. Bahnförmiges Produkt nach zumindest einem der vorhergehenden Ansprüche, **dadurch gekennzeichnet,**
**dass** das Produktmaterial unter Ausnahme des ersten Füllstoffs enthält zumindest ein Material aus der Gruppe PVC (Polyvinylchlorid), TPE (Thermoplastisches Elastomer), TPO (Thermoplastischer Elastomer auf Olefinbasis) oder FPO (Flexibles Polyolefin), TPV (Thermoplastisches Vulkanisat), EPDM (Ethylen-Propylen-DienKautschuk), EVA (Ethylenvinylacetat), Fluorpolymere.

10. Bahnförmiges Produkt nach zumindest einem der vorhergehenden Ansprüche, **dadurch gekennzeichnet,**
**dass** das Produktmaterial, aus dem die Deckschicht (12) oder eine Schicht (20) dieser besteht, in Gew.-% zumindest enthält bei
PVC-P als Polymermatrix: PVC ≥ 40, Weichmacher ≤ 40, weitere Materialien ≤ 20 enthaltend den ersten Füllstoff, wobei vorzugsweise der Weichmacher ein monomerer Weichmacher, ein biobasierter Weichmacher, ein linearer Weichmacher, ein polymerer Weichmacher oder eine Kombination dieser ist, oder
TPE als Polymermatrix: TPE ≥ 50, weitere Materialien ≤ 50 enthaltend den ersten Füllstoff
oder
ECB als Polymermatrix: Butylacrylat-Copolymer ≥ 25, Bitumen ≥ 25, weitere Materialien ≤ 30 enthaltend den ersten Füllstoff
oder
EVA (oder EVAC) als Polymermatrix: Ethylen-Vinylacetat (EVA) ≥ 25, Polyvinylchlorid (PVC) ≤ 50, weitere Materialien ≤ 30 enthaltend den ersten Füllstoff
oder
FPO als Polymermatrix: Flexibles Polyolefin (FPO) ≥ 30, weitere Materialien ≤ 70 enthaltend den ersten Füllstoff
oder
PIB als Polymermatrix: Hochmolekulares Polyisobutylen (PIB) >_ 30, weitere Materialien ≤ 80 enthaltend den ersten Füllstoff
oder
EPDM als Polymermatrix: EPDM-Elastomer ≥ 30, weitere Materialien ≤ 75 enthaltend den ersten Füllstoff

11. Verfahren zur Herstellung eines bahnförmigen Produkts (10) oder einer Schicht (20) von diesem, insbesondere Abdeckbahn für einen Bauwerksbereich, wie Dach, Keller, Becken, bestehend aus oder enthaltend eine Deckbahn mit zumindest einem ersten Füllstoff, nach zumindest einem der vorhergehenden Ansprüche, umfassend zumindest die Verfahrensschritte
a) Mischen von zumindest heterogenen Abfallstoffen aus Haushalt und/oder Industrie zur Verwendung als den ersten Füllstoff,
b) vorzugsweise Erhitzen und Trocknen der Mischung,
c) Herstellen eines Granulats zur Bildung eines ersten Materials,
d) ggf. Mahlen des Granulats des ersten Materials,
e) ggf. Sieben des ersten Materials
f) Mischen zumindest des ersten Materials mit einem mehrere Substanzen aufweisenden zweiten Material, das insbesondere eine Polymermatrix enthält, wobei das erste und das zweite Material zusammen das Produktmaterial bilden, und
g) Extrudieren des Produktmaterials, um anschließend insbesondere durch Kalandrieren das bahnförmige Produkt oder eine Schicht von diesem zur Verfügung zu stellen, wobei
vor dem Verfahrensschritt f) das erste Material mit einem zweiten Füllstoff in Form eines anorganischen oder mineralischen Füllstoffs, insbesondere Kreide und/oder Kaolin und/oder Talkum, und/oder Ruß gemischt wird,
oder
A) Mischen von zumindest heterogenen Abfallstoffen aus Haushalt und/oder Industrie zur Verwendung als den ersten Füllstoff,
B) vorzugsweise Erhitzen und Trocknen der Mischung,
C) Herstellen eines Granulats zur Bildung eines ersten Materials,
D) ggf. Mahlen des Granulats des ersten Materials,
E) ggf. Sieben des ersten Materials
F) Mischen des ersten Materials mit einem Trägermaterial, insbesondere Kunststoff, und Granulieren, insbesondere Extrudieren oder Compoundieren und anschließendes Granulieren, zur Herstellung eines Masterbatch-Granulats,
G) Mischen des Masterbatch-Granulats mit einem mehrere Substanzen enthaltenden dritten Material, das vorzugsweise eine Polymermatrix enthält und als Trägermaterial ein solches verwendet wird, das mit der Polymermatrix kompatibel ist, wobei das Masterbatch-Granulat und das dritte Material zusammen das Produktmaterial bilden,
H) Extrudieren des Produktmaterials, um anschließend insbesondere durch Kalandrieren das bahnförmige Produkt oder eine Schicht von diesem zur Verfügung zu stellen, wobei vorzugsweise vor dem Verfahrensschritt G) ein weiteres Granulat hergestellt oder ein weiteres Granulat benutzt wird, das einen zweiten Füllstoff in Form eines anorganischen oder mineralischen Füllstoffs oder Ruß, insbesondere Kreide und/oder Kaolin und/oder Talkum und/oder Ruß, enthält und sodann mit dem Masterbatch-Granulat zur Herstellung eines Hybrid-Granulats gemischt wird, und im Verfahrensschritt G) das Hybrid-Granulat mit dem dritten Material gemischt wird.

12. Verfahren nach Anspruch 11, **dadurch gekennzeichnet,**
**dass** aus dem Produktmaterial eine erste Schicht (20) des bahnförmigen Produkts (12) gebildet wird und vorzugsweise von zumindest einer weiteren Schicht (22, 24) abgedeckt wird, wobei insbesondere die erste Schicht (20) sowohl von einer Oberschicht (24) als auch einer Unterschicht (22) abgedeckt wird, wobei insbesondere die erste Schicht (20) eine Mittelschicht ist, die mit der Oberschicht (24) und der Unterschicht (22) durch Koextrusion, Kalandrierverfahren oder Streichverfahren verbunden wird, und wobei vorzugsweise die Mittelschicht (20) derart von der Oberschicht (24) und der Unterschicht (22) umgeben wird, dass die Mittelschicht voll umfänglich eingekapselt ist.

13. Verfahren nach zumindest Anspruch 11,
**dadurch gekennzeichnet,**
**dass** das Granulat bzw. Hybrid-Granulat bei einer Temperatur T₁ mit T_{1 <} 80 °C gemahlen wird, und/oder dass das erste Material bzw. Hybrid-Granulat mit dem zweiten Material bei einer Temperatur T₂ mit 170 °C ≤ T₂ ≤ 195 °C gemischt wird, insbesondere in einem Extruder, und/oder dass das Produktmaterial bei einer Temperatur T₃ mit 170 °C ≤ T₃ ≤ 195 °C kalandriert wird.

14. Verfahren nach zumindest Anspruch 11,
**dadurch gekennzeichnet,**
**dass** die heterogenen Abfallstoffe vor dem Granulieren kompaktiert werden, und/oder dass das erste Material mit dem zweiten bzw. dritten Material erst dann gemischt wird, wenn in dem zweiten bzw. dritten Material vorhandener Weichmacher von dem in dem zweiten bzw. dritten Material vorhandenen Kunststoff aufgenommen ist.

15. Verwendung des ersten Füllstoffs entsprechend zumindest einem der vorhergehenden Ansprüche als Füllstoff anstelle eines Füllstoffs, der Polymer der Matrix einer Deckbahn (20) oder Schicht eines bahnförmigen Produkts (10) ersetzt.
